# EUROPEAN PATENT APPLICATION

(11) **EP 2 960 688 A1**
(43) Date of publication of application: **30.12.2015**
(21) Application number: 14754868.9
(22) Date of filing: 29.01.2014
(51) Int. Cl.: G02B 5/08, B32B 15/08, F24J 2/10, G02B 5/22

(54) **SUNLIGHT-COLLECTING FILM MIRROR AND METHOD FOR PRODUCING SAME**

(30) Priority: 20.02.2013 JP 2013031243; 17.09.2013 JP 2013191808; 20.12.2013 JP 2013263673
(71) Applicant: Fujifilm Corporation, Minato-ku Tokyo 106-8620 (JP)
(72) Inventor: TOMINAGA Jou, Ashigara-kami-gun Kanagawa 258-8577 (JP); ISOBE Hidemi, Ashigara-kami-gun Kanagawa 258-8577 (JP); AONO Naruhiko, Ashigara-kami-gun Kanagawa 258-8577 (JP)
(74) Representative: Hoffmann Eitle
(86) International application number: PCT/JP2014/051985
(87) International publication number: WO 2014/129275

(57) **Abstract**

The present invention provides: a sunlight-collecting film mirror that has excellent light resistance and in which the protective layer thereof has excellent adhesion; and method for producing the film mirror. This sunlight-collecting film mirror includes at least a protective layer, a silver reflective layer, and a resin substrate in this order from the light incident side, wherein the surface of the silver reflective layer on the protective layer side and/or the surface layer include(s) a corrosion inhibitor, and the content of the corrosion inhibitor is 0.1-10 mg/m².

## Description

### TECHNICAL FIELD

The present invention relates to a film mirror for solar radiation collection and a method for producing the same, and particularly relates to a film mirror for solar radiation collection having a prescribed amount of a corrosion inhibitor on a surface and/or in a surface layer of a silver reflective layer, and a method for producing such a film mirror.

### BACKGROUND ART

Glass mirrors have conventionally been used in solar radiation reflecting devices because they are exposed to ultraviolet rays and heat from solar radiation, wind and rain, dust, and the like.

However, when a glass mirror is used, there are issues associated with possible damage during transportation and with high construction cost since a frame on which the mirror is mounted requires high mechanical strength.

To solve such problems, substituting a resin reflective sheet (film mirror) for the glass mirror has been recently proposed.

For example, Patent Literature 1 discloses a film mirror comprising an adhesive layer, a silver reflection layer and an upper adjacent layer provided on a resin substrate sequentially in this order, and describes that the upper adjacent layer contains a binder and a corrosion inhibitor for silver. Furthermore, it is described in the EXAMPLES section of Patent Literature 1 that the upper adjacent layer was formed by using a curable resin composition containing a polyester resin and a TDI type isocyanate.

### CITATION LIST

### PATENT LITERATURE

Patent Literature 1: WO 2011/077982

### SUMMARY OF INVENTION

### TECHNICAL PROBLEMS

Meanwhile, the desire for a film mirror that can be used over a long period of time under harsh conditions such as in a desert and the like has increased recently, and further improvement of lightfastness is demanded. At the same time, improvement in adhesion of the protective layer disposed on the surface of the film mirror for protecting the silver reflective layer is also demanded.

When the present inventors referred to Patent Literature 1 so as to form a protective layer (equivalent to the upper adjacent layer in Patent Literature 1) on a silver reflective layer using a curable resin composition containing a corrosion inhibitor, if a large amount of corrosion inhibitor was used, curing of the curable resin composition did not proceed sufficiently and adhesion of the protective layer was poor. Furthermore, when they decreased the amount of corrosion inhibitor used in order to promote curing, lightfastness did not reach the level presently required, and further improvement was necessary.

In view of the above circumstances, an object of the present invention is to provide a film mirror for solar radiation collection having excellent adhesion of the protective layer and excellent lightfastness, and a method for producing such a film mirror.

### SOLUTION TO PROBLEMS

As a result of diligent research to solve the above problems, the present inventors discovered that the above problems can be solved by providing a prescribed amount of corrosion inhibitor on the surface and/or in the surface layer of the silver reflective layer, and the present invention has thus been completed.

Specifically, the present inventors discovered that the above problems can be solved by the following configuration.

(1) A film mirror for solar radiation collection, comprising at least a protective layer, a silver reflective layer, and a resin substrate in this order from a light incident side, wherein the film mirror has a corrosion inhibitor present at either or both of a surface and a surface layer of the silver reflective layer on the protective layer side, with a content of the corrosion inhibitor being 0.1 to 10 mg/m².
(2) The film mirror for solar radiation collection according to (1), wherein the protective layer contains an ultraviolet absorber.
(3) The film mirror for solar radiation collection according to (1) or (2), wherein the protective layer has a thickness of 10 to 500 µm.
(4) The film mirror for solar radiation collection according to any one of (1) to (3), wherein the corrosion inhibitor includes at least one compound selected from the group consisting of compounds represented by formula (F) to be described later, compounds represented by formula (I) to be described later, and compounds represented by formula (J) to be described later.
(5) The film mirror for solar radiation collection according to any one of (1) to (3), wherein the corrosion inhibitor includes at least one compound selected from the group consisting of compounds having a pyrimidine skeleton and compounds having a tetrazole skeleton.
(6) The film mirror for solar radiation collection according to (5), wherein the corrosion inhibitor includes at least one compound selected from the group consisting of pyrimidine compounds represented by formula (K) and tetrazole compounds represented by formula (L).
(7) The film mirror for solar radiation collection according to any one of (1) to (6), wherein the corrosion inhibitor is contained inside the silver reflective layer.
(8) A method for producing the film mirror for solar radiation collection according to any one of (1) to (7), comprising: step (1) of providing the corrosion inhibitor onto a silver reflective layer of a resin substrate-silver reflective layer combination; and step (2) of forming the protective layer on the silver reflective layer as provided with the corrosion inhibitor.
(9) The method for producing the film mirror for solar radiation collection according to (8), wherein the step (1) of providing the corrosion inhibitor is a step of applying the corrosion inhibitor onto the silver reflective layer or a step of immersing the resin substrate-silver reflective layer combination in the corrosion inhibitor.
(10) The method for producing the film mirror for solar radiation collection according to (8) or (9), further comprising step (3) of cleaning with a solvent after the step (1) and before the step (2).

### ADVANTAGEOUS EFFECTS OF INVENTION

According to the present invention, a film mirror for solar radiation collection having excellent adhesion of a protective layer and excellent lightfastness and a method for producing the same can be provided.

### BRIEF DESCRIPTION OF DRAWINGS

[FIG. 1] FIG. 1 is a section view illustrating a first embodiment of the film mirror for solar radiation collection of the present invention.
[FIG. 2] FIG. 2 is a section view illustrating a second embodiment of the film mirror for solar radiation collection of the present invention.
[FIG. 3] FIG. 3 is a section view illustrating another example of the first embodiment of the film mirror for solar radiation collection of the present invention.
[FIG. 4] FIG. 4 is a section view illustrating another example of the first embodiment of the film mirror for solar radiation collection of the present invention.

### DESCRIPTION OF EMBODIMENTS

Preferred embodiments of a film mirror for solar radiation collection and a method for producing the same of the present invention will be described below.

First, the features of the present invention compared to the prior art will be described in detail.

One feature of the present invention is that the silver reflective layer has a prescribed amount of corrosion inhibitor on the surface and/or in the surface layer thereof. Owing to the presence of a corrosion inhibitor at least either on the surface or in the surface layer of the silver reflective layer, corrosion of the silver reflective layer is further suppressed and lightfastness is improved. Furthermore, by using a corrosion inhibitor in a prescribed amount, adhesion between the protective layer and the silver reflective layer can be improved. In particular, in the present invention, the curing reaction is not easily hindered and a protective layer having excellent adhesion is obtained even when the protective layer is to be formed of a curable resin composition.

### <First embodiment>

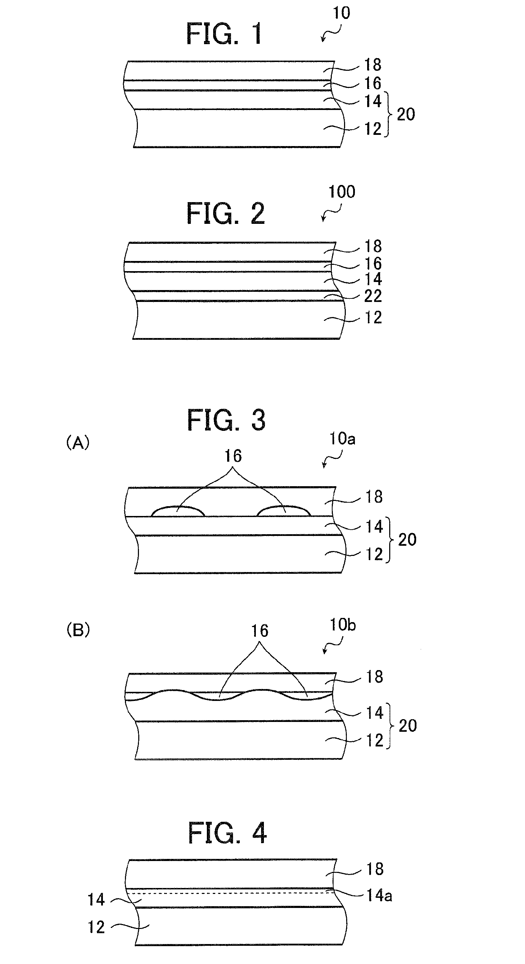

A first embodiment of the film mirror for solar radiation collection (hereafter also referred to simply as "film mirror") of the present invention will be described in reference to the drawings. FIG. 1 is a section view illustrating an embodiment of the film mirror of the present invention.

A film mirror 10 has a resin substrate 12, a silver reflective layer 14, a corrosion inhibitor 16, and a protective layer 18 in this order. Light such as solar radiation is incident from the protective layer 18 side, and is reflected on the surface of the silver reflective layer 14. Furthermore, the resin substrate 12 and the silver reflective layer 14 constitute a resin substrate-silver reflective layer combination 20.

Each of the layers that constitute the film mirror 10 will be described in detail below.

### [Resin substrate]

The resin substrate 12 is a substrate that imparts flexibility to the film mirror 10. The type of the substrate is not particularly limited provided that it is a resin substrate that supports the silver reflective layer 14 and the protective layer 18.

Examples of the material that constitutes the resin substrate 12 include polyolefin resins such as polyethylene and polypropylene; polyester resins such as polyethylene terephthalate and polyethylene naphthalate; polycarbonate resins; acrylic resins such as polymethyl methacrylate; polyamide resins; polyimide resins; polyvinyl chloride resins; polyphenylene sulfide resins; polyether sulfone resins; polyethylene sulfide resins; polyphenylene ether resins; styrene resins; cellulose resins such as cellulose acetate; and the like.

Among these, polyester resins or acrylic resins are preferred because weather resistance of the film mirror is high.

The resin substrate 12 is flat in shape, but its shape is not particularly limited to the shape of FIG. 1, and may be, for example, concave, convex, or the like.

The thickness of the resin substrate 12 is not particularly limited because it varies depending on the shape thereof, but if the resin substrate is flat as illustrated in FIG. 1, a thickness of 25 to 300 µm is normally preferred.

### [Silver reflective layer]

The silver reflective layer 14 is provided on the resin substrate 12, and has a function of reflecting incident light.

The silver reflective layer 14 contains silver atoms as the main component. The main component means the metal component of highest content among the metal components that constitute the silver reflective layer 14. More specifically, in a preferred mode, the main component comprises not less than 90% by weight of the metal components that constitute the silver reflective layer 14.

The silver reflective layer 14 may also contain other metals than silver as long as they do not affect reflection characteristics. Examples of other metals include gold, copper, nickel, iron, palladium, and the like.

As will be described later, the surface layer of the silver reflective layer 14 may contain a corrosion inhibitor. Details will be described later.

The thickness of the silver reflective layer 14 is not particularly limited, but from the perspective of reflectance, it is preferably 50 to 500 nm, and more preferably 80 to 300 nm.

The method for forming the silver reflective layer 14 is not particularly limited, and either a wet method or a dry method may be employed.

Exemplary wet methods include such known methods as so-called metal plating (electroless plating or electroplating).

Exemplary dry methods include vacuum evaporation, sputtering, and ion plating.

### [Corrosion inhibitor]

The corrosion inhibitor 16 is attached onto the surface of the silver reflective layer 14 in a prescribed amount, and has a function of suppressing corrosion of the silver reflective layer 14.

In FIG. 1, the corrosion inhibitor 16 is in the form of a layer formed over the entire surface of the silver reflective layer 14, to which the present invention is not limited. The corrosion inhibitor may be distributed on at least part of the surface of the silver reflective layer 14, provided that the attached amount to be described later is satisfied. More specifically, as illustrated in FIG. 3(A), the corrosion inhibitor may be distributed on at least part of the surface of the silver reflective layer 14 in the form of islands. Alternatively, the corrosion inhibitor may constitute a continuous layer on the surface of the silver reflective layer 14 which has island-like portions where no corrosion inhibitor is attached to the surface.

Additionally, even if the surface of the silver reflective layer 14 is uneven, the corrosion inhibitor may be of any form as long as it falls within the range to be described later. For example, the corrosion inhibitor may be attached to concave portions of the uneven surface of the silver reflective layer 14 as illustrated in FIG. 3(B) or, conversely, to convex portions thereof. Furthermore, when the corrosion inhibitor is disposed in layer form, the layer may be a so-called monomolecular layer.

Here, "corrosion" refers to a phenomenon in which silver is chemically or electrochemically eroded or degraded as a material by environmental substances surrounding it (refer to JIS Z 0103-2004).

In FIG. 1, the corrosion inhibitor 16 is disposed on the surface of the silver reflective layer 14, to which the present invention is not limited. The corrosion inhibitor may also be contained in a surface layer 14a of the silver reflective layer 14, as illustrated in FIG. 4. More specifically, in the surface layer 14a of the silver reflective layer 14 illustrated in FIG. 4, a component that constitutes the silver reflective layer 14 described above (for example, silver) and a corrosion inhibitor are present in a mixed manner. The state of mixing is not particularly limited, and may be, for example, such that granular silver is packed in the surface layer 14a and the corrosion inhibitor exists in the voids between the silver granules.

The surface layer 14a refers to a region up to a depth of 50 nm from the surface of the silver reflective layer 14 on the protective layer 18 side. When the surface layer 14a contains a corrosion inhibitor, it is preferred that the corrosion inhibitor be present only in a region up to a depth of 30 nm from the surface of the silver reflective layer 14 on the protective layer 18 side because surface reflection characteristics of the silver reflective layer are better.

The corrosion inhibitor 16 is at least either on the surface or in the surface layer of the silver reflective layer 14, as described above. That is, the corrosion inhibitor may be present only on the surface or only in the surface layer of the silver reflective layer 14, or may be present both on the surface and in the surface layer of the silver reflective layer 14. The corrosion inhibitor being present in the surface layer of the silver reflective layer 14 means that it is present inside the silver reflective layer 14.

The corrosion inhibitor content is 0.1 to 10 mg/m². From the viewpoint of having a better combination of adhesion of the protective layer 18 and lightfastness of the film mirror, the content is preferably from 0.3 to 8.0 mg/m², and more preferably from 0.5 to 6.0 mg/m². Here, the corrosion inhibitor content means the total amount of corrosion inhibitor on the surface and in the surface layer of the silver reflective layer 14. For example, if the corrosion inhibitor is only present on the surface of the silver reflective layer 14, the amount (attached amount) of the corrosion inhibitor on the surface should fall within the above range. If the corrosion inhibitor is present both on the surface and in the surface layer of the silver reflective layer 14, the total amount of the corrosion inhibitor on the surface and in the surface layer should fall within the above range.

The method for measuring the amount of the corrosion inhibitor 16 may be a method in which the corrosion inhibitor on the surface and/or in the surface layer is leached out with an acidic solution such as 25% hydrochloric acid and measured based on the absorbance of a UV-visible absorption spectrum, or a method in which surface elemental analysis is performed by XPS or the like. Furthermore, mg/m² represents the attached amount of corrosion inhibitor per unit area (m²) of the surface of the silver reflective layer. If the corrosion inhibitor is contained in the surface layer of the silver reflective layer, it represents the amount of the contained corrosion inhibitor per unit area (m²) of the projective plan obtained when the surface layer is projected in the direction perpendicular to the surface of the silver reflective layer on the protective layer side.

The corrosion inhibitor 16 is not particularly limited in type but may be any compound as long as it can suppress corrosion of silver, with a compound having a group adsorptive to silver being particularly preferred.

Desirable examples of the corrosion inhibitor which has a group adsorptive to silver (for example, a nitrogen-containing group such as an amino group and a heterocyclic group, or a sulfur-containing group such as a mercapto group and S=C<) include: amines and derivatives thereof; compounds having a pyrrole ring; compounds having a triazole ring such as benzotriazole; compounds having a pyrazole ring; compounds having a thiazole ring; compounds having an imidazole ring; compounds having an indazole ring; compounds having a pyridine ring; compounds having a pyrimidine skeleton; compounds having a tetrazole skeleton; copper chelate compounds; thioureas; compounds having a mercapto group; thioethers (those having a sulfide bond); at least one naphthalene system; and mixtures thereof. Some compounds including benzotriazole may serve as both an ultraviolet absorber and a corrosion inhibitor. It is also possible to use a silicone modified resin. The silicone modified resin to be used is not particularly limited.

Among these, a compound having a pyrimidine skeleton (preferably a compound represented by formula (K) described later) and a compound having a tetrazole skeleton (preferably a compound represented by formula (L) described later) are preferably used because the film mirror is more excellent not only in reflectance (initial reflectance) but resistance to moist heat.

Examples of amines and derivatives thereof include ethylamine, laurylamine, tri-n-butylamine, o-toluidine, diphenylamine, ethylenediamine, diethylenetriamine, triethylenetetramine, tetraethylenepentamine, monoethanolamine, diethanolamine, triethanolamine, N,N-dimethylethanolamine, 2-amino-2-methyl-1,3-propanediol, acetamide, acrylamide, benzamide, p-ethoxychrysoidine, dicyclohexyl ammonium nitrite, dicyclohexyl ammonium salicylate, monoethanolamine benzoate, dicyclohexyl ammonium benzoate, diisopropyl ammonium benzoate, diisopropyl ammonium nitrite, cyclohexylamine carbamate, nitronaphthalene ammonium nitrite, cyclohexylamine benzoate, dicyclohexyl ammonium cyclohexane carboxylate, cyclohexylamine cyclohexane carboxylate, dicyclohexyl ammonium acrylate, cyclohexylamine acrylate, and mixtures thereof.

Examples of compounds having a pyrrole ring include N-butyl-2,5-dimethylpyrrole, N-phenyl-2,5-dimethylpyrrole, N-phenyl-3-formyl-2,5-dimethylpyrrole, N-phenyl-3,4-diformyl-2,5-dimethylpyrrole, and mixtures thereof.

Examples of compounds having a triazole ring include 1,2,3-triazole, 1,2,4-triazole, 3-mercapto-1,2,4-triazole, 3-hydroxy-1,2,4-triazole, 3-methyl-1,2,4-triazole, 1-methyl-1,2,4-triazole, 1-methyl-3-mercapto-1,2,4-triazole, 4-methyl-1,2,3-triazole, benzotriazole, tolyltriazole, 1-hydroxybenzotriazole, 4,5,6,7-tetrahydrotriazole, 3-amino-1,2,4-triazole, 3-amino-5-methyl-1,2,4-triazole, carboxybenzotriazole, 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2'-hydroxy-4-octoxyphenyl)benzotriazole, 2-(2'-hydroxy-3'-t-butyl-5'-methylphenyl)benzotriazole, 2,2'-methylenebis[6-(2H-benzotriazol-2-yl)-4-(1,1,3,3-tetramethylbutyl)phenol] (molecular weight, 659; LA31 commercially available from ADEKA Corp., for example), 2-(2H-benzotriazol-2-yl)-4,6-bis(1-methyl-1-phenylethyl)phenol (molecular weight, 447.6; Tinuvin 234 commercially available from Ciba Specialty Chemicals K.K., for example), and mixtures thereof.

Examples of compounds having a pyrazole ring include pyrazole, pyrazoline, pyrazolone, pyrazolidine, pyrazolidone, 3,5-dimethylpyrazole, 3-methyl-5-hydroxypyrazole, 4-aminopyrazole, and mixtures thereof.

Examples of compounds having a thiazole ring include thiazole, thiazoline, thiazolone, thiazolidine, thiazolidone, isothiazole, benzothiazole, 2-N,N-diethylthiobenzothiazole, P-dimethylaminobenzalrhodanine, 2-mercaptobenzothiazole, and mixtures thereof.

Examples of compounds having an imidazole ring include imidazole, histidine, 2-heptadecylimidazole, 2-methylimidazole, 2-ethyl-4-methylimidazole, 2-phenylimidazole, 2-undecylimidazole, 1-benzyl-2-methylimidazole, 2-phenyl-4-methylimidazole, 1-cyanoethyl-2-methylimidazole, 1-cyanoethyl-2-phenylimidazole, 1-cyanoethyl-2-ethyl-4-methylimidazole, 1-cyanoethyl-2-undecylimidazole, 2-phenyl-4-methyl-5-hydromethylimidazole, 2-phenyl-4,5-dihydroxymethylimidazole, 4-formylimidazole, 2-methyl-4-formylimidazole, 2-phenyl-4-formylimidazole, 4-methyl-5-formylimidazole, 2-ethyl-4-methyl-5-formylimidazole, 2-phenyl-4-methyl-4-formylimidazole, 2-mercaptobenzimidazole, and mixtures thereof.

Examples of compounds having an indazole ring include 4-chloroindazole, 4-nitroindazole, 5-nitroindazole, 4-chloro-5-nitroindazole, and mixtures thereof.

Examples of copper chelate compounds include cupric acetylacetonate, copper-ethylenediamine complex, copper phthalocyanine, copper disodium ethylenediaminetetraacetate, copper 8-hydroxyquinoline, and mixtures thereof.

Examples of thioureas include thiourea, guanyl thiourea, and mixtures thereof.

Examples of compounds having a mercapto group include mercaptoacetic acid, thiophenol, 1,2-ethanediol, 3-mercapto-1,2,4-triazole, 1-methyl-3-mercapto-1,2,4-triazole, 2-mercaptobenzothiazole, 2-mercaptobenzimidazole, glycol dimercaptoacetate, 3-mercaptopropyl trimethoxysilane, and mixtures thereof, with some of those being already mentioned above.

Examples of thioethers include didodecyl 3,3'-thiodipropionate, distearyl 3,3'-thiodipropionate, ditridecyl 3,3'-thiobispropionate, 2,2-bis[[3-(dodecylthio)-1-oxopropoxy]methyl]propane-1,3-diyl bis[3-(dodecylthio)propionate], tetrakis-(7-mercapto-2,5-dithiaheptyl)methane, 4,4'-diaminodiphenyl disulfide, diphenyl disulfide, and mixtures thereof.

Examples of naphthalene systems include thionalide.

Examples of compounds having a pyridine ring include pyridine, aminopyridine, 2,6-diaminopyridine, 3,4-diaminopyridine, 4,5,6-triaminopyridine, 2-mercaptopyridine, 2,3-pyridinedithiol, and mixtures thereof.

Compounds having a pyrimidine skeleton are compounds having a pyrimidine structure, examples thereof including pyrimidine, 2-aminopyrimidine, 5-aminopyrimidine, 2,4-diaminopyrimidine, 4,5-diaminopyrimidine, 2,4,6-triaminopyrimidine, 2-mercaptopyrimidine, 5-mercaptopyrimidine, 2,4-dimercaptopyrimidine, 4,5-dimercaptopyrimidine, 2,4,6-trimercaptopyrimidine, 2-mercapto-4-aminopyrimidine, 2-amino-4,6-dimercaptopyrimidine, 4,5-diaminopyrimidine-2,6-dithiol, 4,5-diamino-6-hydroxy-2-pyrimidinethiol, disodium 2-[N-(2,6-dimercaptopyrimidin-4-yl)-N-methylamino] acetate, disodium 2-[N-(4,6-dimercaptopyrimidin-4-yl)-N-methylamino] acetate, and mixtures thereof.

Compounds having a tetrazole skeleton are compounds having a tetrazole structure, examples thereof including tetrazole, 5-aminotetrazole, 5-mercaptotetrazole, 5-mercapto-1-methyltetrazole, 1-phenyl-5-mercaptotetrazole, 1-(5-methylureidophenyl)-5-mercaptotetrazole, 1-(5-carboxyphenyl)-5-mercaptotetrazole, and mixtures thereof.

Specific examples of the corrosion inhibitor include compounds represented by formulas (D) to (L) below.

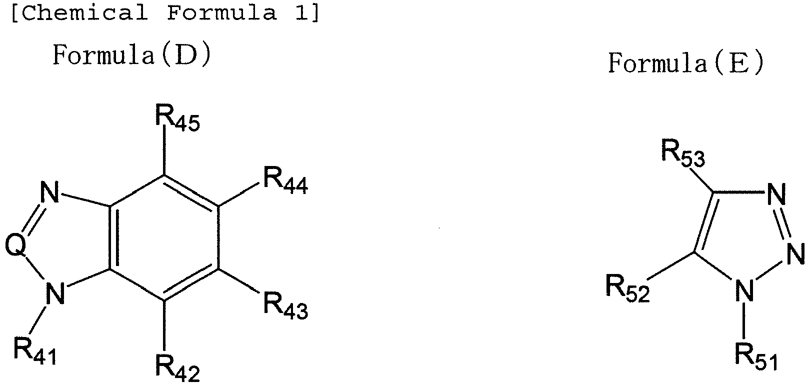

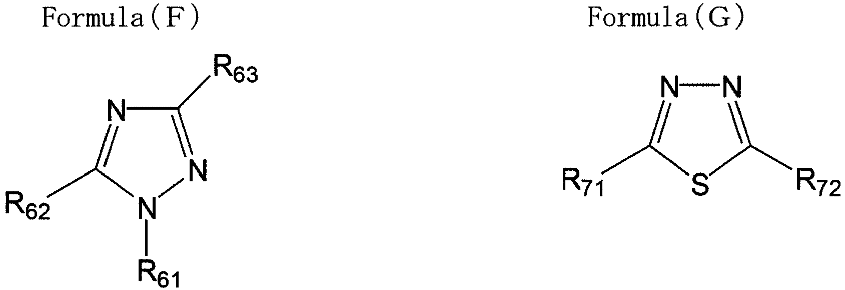

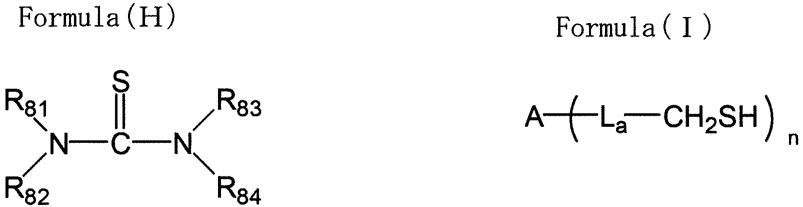

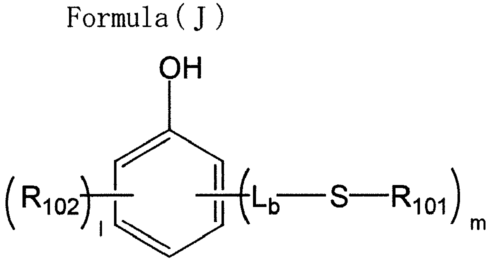

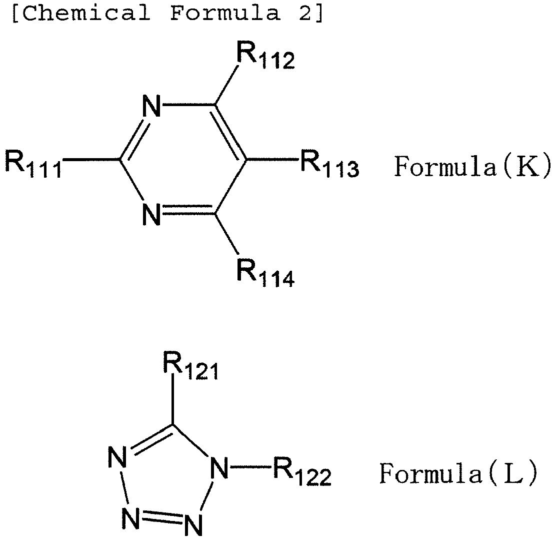

In formula (D), R₄₁ to R₄₅ each independently denote a hydrogen atom or a substituent.

Examples of substituents include halogen atoms (for example, fluorine atom, chlorine atom, and the like), alkyl groups (for example, methyl group, ethyl group, isopropyl group, hydroxyethyl group, methoxymethyl group, trifluoromethyl group, t-butyl group, and the like), cycloalkyl groups (for example, cyclopentyl group, cyclohexyl group, and the like), aralkyl groups (for example, benzyl group, 2-phenethyl group, and the like), aryl groups (for example, phenyl group, naphthyl group, p-tolyl group, p-chlorophenyl group, and the like), alkoxy groups (for example, methoxy group, ethoxy group, isopropoxy group, butoxy group, and the like), aryloxy groups (for example, phenoxy group and the like), acylamino groups (for example, acetylamino group, propionylamino group, and the like), alkylthio groups (for example, methylthio group, ethylthio group, butylthio group, and the like), arylthio groups (for example, a phenylthio group and the like), sulfonylamino groups (for example, methanesulfonylamino group, benzenesulfonylamino group, and the like), ureido groups (for example, 3-methylureido group, 3,3-dimethylureido group, 1,3-dimethylureido group, and the like), sulfamoylamino groups (for example, dimethylsulfamoylamino group and the like), carbamoyl groups (for example, methylcarbamoyl group, ethylcarbamoyl group, dimethylcarbamoyl group, and the like), sulfamoyl groups (for example, ethylsulfamoyl group, dimethylsulfamoyl group, and the like), alkoxycarbonyl groups (for example, methoxycarbonyl group, ethoxycarbonyl group, and the like), aryloxycarbonyl groups (for example, phenoxycarbonyl group and the like), sulfonyl groups (for example, methanesulfonyl group, butanesulfonyl group, phenylsulfonyl group, and the like), acyl groups (for example, acetyl group, propanoyl group, butyroyl group, and the like), amino groups (methylamino group, ethylamino group, dimethylamino group, and the like), a hydroxy group, a nitro group, a nitroso group, amine oxide groups (for example, pyridine-oxide group), imide groups (for example, phthalimide group and the like), disulfide groups (for example, benzenesulfide group, benzothiazolyl-2-disulfide group, and the like), a carboxy group, a cyano group, a mercapto group, a sulfo group, heterocyclic groups (for example, pyrrole group, pyrrolidyl group, pyrazolyl group, imidazolyl group, pyridyl group, benzimidazolyl group, benzthiazolyl group, benzoxazolyl group, and the like), and groups in which those are combined. The substituents may have an additional substituent.

It is particularly preferred that R₄₁ to R₄₅ are each independently selected from the group consisting of a hydrogen atom, an alkyl group, an amino group, and a mercapto group because lightfastness is better.

In formula (D), Q denotes a nitrogen atom or CR₄₆. R₄₆ denotes a hydrogen atom or a substituent. The substituent has the same definition as the substituents denoted by R₄₁ to R₄₅ in formula (D).

Among others, R₄₆ is preferably a hydrogen atom.

In formula (E), R₅₁ to R₅₃ each independently denote a hydrogen atom or a substituent. The substituent has the same definition as the substituents denoted by R₄₁ to R₄₅ in formula (D).

It is particularly preferred that R₅₁ to R₅₃ are each independently selected from the group consisting of a hydrogen atom, an alkyl group, an amino group, and a mercapto group because lightfastness is better.

In formula (F), R₆₁ to R₆₃ each independently denote a hydrogen atom or a substituent. The substituent has the same definition as the substituents denoted by R₄₁ to R₄₅ in formula (D).

It is particularly preferred that R₆₁ to R₆₃ are each independently selected from the group consisting of a hydrogen atom, an alkyl group, an amino group, and a mercapto group because lightfastness is better.

In formula (G), R₇₁ to R₇₂ each independently denote a hydrogen atom or a substituent. The substituent has the same definition as the substituents denoted by R₄₁ to R₄₅ in formula (D).

It is particularly preferred that R₇₁ to R₇₂ are each independently selected from the group consisting of a hydrogen atom, an alkyl group, an amino group, a mercapto group, and an alkylsulfide group because lightfastness is better.

In formula (H), R₈₁ to R₈₄ each independently denote a hydrogen atom or a substituent. The substituent has the same definition as the substituents denoted by R₄₁ to R₄₅ in formula (D).

It is particularly preferred that R₈₁ to R₈₄ are each independently selected from the group consisting of a hydrogen atom and an alkyl group because lightfastness is better.

In formula (I), A denotes an aliphatic hydrocarbon group having from 1 to 3 carbon atoms.

Lₐ denotes an alkylene group, -S-, -CO-, -O-, or a group in which those are combined (for example, -alkylene group-S-alkylene group- or -COO-alkylene group).

n denotes an integer from 2 to 4.

In formula (J), R₁₀₁ and R₁₀₂ each independently denote a hydrogen atom or a substituent. The substituent has the same definition as the substituents denoted by R⁴¹ to R⁴⁵ in formula (D).

It is particularly preferred that R₁₀₁ is selected from the group consisting of a hydrogen atom and an alkyl group and R₁₀₂ is selected from the group consisting of a hydrogen atom, a mercapto group, an amino group, and an alkyl group because lightfastness is better.

L_{b} denotes an alkylene group.

m denotes an integer from 1 to 5; 1 denotes an integer from 0 to 4; and m and 1 satisfy the relation m + 1 = 5.

In formula (K), R₁₁₁ to R₁₁₄ each independently denote a hydrogen atom or a substituent. The substituent has the same definition as the substituents denoted by R⁴¹ to R⁴⁵ in formula (D).

It is particularly preferred that R₁₁₁, R₁₁₂, and R₁₁₄ are each independently a mercapto group, an amino group (including primary to tertiary amino groups) or a carboxy group and R₁₁₃ is a hydrogen atom because a film mirror obtained is more excellent in reflectance and/or resistance to moist heat.

In formula (L), R₁₂₁ and R₁₂₂ each independently denote a hydrogen atom or a substituent. The substituent has the same definition as the substituents denoted by R⁴¹ to R⁴⁵ in formula (D).

It is particularly preferred that R₁₂₁ is a mercapto group or an amino group and R₁₂₂ is a phenyl group, a methylureidophenyl group or a carboxyphenyl group because a film mirror obtained is more excellent in reflectance and/or resistance to moist heat.

The method for producing the corrosion inhibitor 16 is not particularly limited, but preferably, step (1) of providing the corrosion inhibitor on top of the silver reflective layer 14 of the resin substrate-silver reflective layer combination 20 is performed. When the corrosion inhibitor is provided on top of the silver reflective layer 14, the corrosion inhibitor attaches (adsorbs) to the surface of the silver reflective layer 14 via interaction. Particularly, when the corrosion inhibitor has a group adsorptive to silver as described above, the corrosion inhibitor attaches (adsorbs) to the surface of the silver reflective layer 14 strongly through the adsorptive group. Furthermore, if there are voids in the surface layer of the silver reflective layer 14, the corrosion inhibitor is to be present in those voids.

The method for providing the corrosion inhibitor to the silver reflective layer 14 is not particularly limited, and may be, for example, the method in which the corrosion inhibitor is brought into direct contact with the silver reflective layer 14, or the method in which a composition containing the corrosion inhibitor and a solvent is brought into contact with the silver reflective layer 14. As an example, the corrosion inhibitor (or composition) may be applied onto the silver reflective layer 14 or the resin substrate-silver reflective layer combination 20 may be immersed in the corrosion inhibitor (or composition).

The contact conditions are not particularly limited provided that they result in the content (attached amount) of corrosion inhibitor as described above. Above all, contact for from 0.2 to 60 minutes under the condition that the temperature is from 10 to 50°C is preferred from the perspective of productivity.

Furthermore, the solvent to be used in the composition is not particularly limited in type, but is preferably a solvent that can dissolve the corrosion inhibitor. Examples include water; alcohol-based solvents such as methanol, ethanol, propanol, ethylene glycol, glycerol, propylene glycol monomethyl ether, and the like; acids such as acetic acid and the like; ketone-based solvents such as acetone, methyl ethyl ketone, cyclohexanone, and the like; amide-based solvents such as formamide, dimethylacetamide, N-methylpyrrolidone and the like; nitrile-based solvents such as acetonitrile, propionitrile, and the like; ester-based solvents such as methyl acetate, ethyl acetate, and the like; carbonate-based solvents such as dimethyl carbonate, diethyl carbonate, and the like; aromatic hydrocarbon-based solvents such as benzene, toluene, xylene, and the like; as well as ether-based solvents, glycol-based solvents, amine-based solvents, thiol-based solvents, halogen-based solvents, and the like.

Furthermore, the content of the corrosion inhibitor in the composition that contains the corrosion inhibitor and a solvent is not particularly limited. Above all, it is preferred that the corrosion inhibitor content be from 0.0001 to 5 parts by weight, and more preferably from 0.01 to 1 part by weight, per 100 parts by weight of solvent because the corrosion inhibitor can be efficiently provided onto the surface of the silver reflective layer 14.

After step (1) and before step (2) to be described later, step (3), in which the resin substrate-silver reflective layer combination 20 provided with the corrosion inhibitor 16 in step (1) is cleaned with a solvent, may be implemented as necessary. By implementing step (3), excess corrosion inhibitor can be removed and the adhesion of the protective layer 18 is further improved.

The solvent used is not particularly limited in type, but is selected according to the type of corrosion inhibitor. Examples include solvents usable in the composition described above. Among others, water, alcohols (methanol, ethanol, isopropanol, and the like), ketones (MEK, acetone, and the like), cyclohexanone, and mixtures thereof are preferred.

The method of cleaning with the solvent is not particularly limited, but may be the method in which the solvent is applied onto the resin substrate-silver reflective layer combination 20 provided with the corrosion inhibitor 16, or the method in which the resin substrate-silver reflective layer combination 20 provided with the corrosion inhibitor 16 is immersed in the solvent.

The cleaning conditions are not particularly limited, but contact with the solvent at from 10 to 50°C for from 0.1 to 5 minutes is preferred because excess corrosion inhibitor can be more efficiently removed.

### [Protective layer]

The protective layer 18 is a layer disposed on the silver reflective layer 14. It is normally disposed as the outermost layer of the film mirror 10 as illustrated in the figures, and is provided for increasing the scratch resistance and stain resistance of the surface of the film mirror 10.

The material that constitutes the protective layer 18 is not particularly limited, provided that it has transparency to transmit light. Examples include resins, glass, ceramics, and the like, among which resins are preferred because of their excellent flexibility. In other words, the protective layer 18 is preferably a resin layer (resin protective layer). In particular, it is more preferably a resin protective layer formed from a curable resin composition (composition containing a heat-curable resin or photocurable resin).

Furthermore, the protective layer 18 may be a laminate made of a plurality of layers (two or more layers) of different materials.

The protective layer 18 may be a resin film, examples of which include cellulose ester-based film, polyester-based film, polycarbonate-based film, polyarylate-based film, polysulfone (including polyether sulfone)-based film, polyester film such as polyethylene terephthalate and polyethylene naphthalate, polyethylene film, polypropylene film, cellophane, cellulose diacetate film, cellulose triacetate film, cellulose acetate propionate film, cellulose acetate butyrate film, polyvinylidene chloride film, polyvinyl alcohol film, ethylene vinyl alcohol film, syndiotactic polystyrene-based film, polycarbonate film, norbornene-based resin film, polymethylpentene film, polyetherketone film, polyetherketone imide film, polyamide film, fluorine resin film, nylon film, polymethylmethacrylate film, acrylic film, and the like.

Among these, from the perspective of weather resistance, polycarbonate-based resin film, polyester-based resin film, norbornene-based resin film, acrylic resin film, fluorine resin film, olefin-based resin film, and the like are preferred, and more specifically, polyvinylidene fluoride (PVDF) film and polymethylmethacrylate (PMMA) film are preferred, and PMMA film is more preferred.

Examples of the curable resin used in formation of the protective layer 18 include heat-curable resins (for example, urethane resin, phenol resin, urea resin, phenoxy resin, silicone resin, polyimide resin, diallyl phthalate resin, furan resin, bismaleimide resin, cyanate resin, and the like), and photocurable resins (for example, urethane (meth)acrylate resin, polyester (meth)acrylate resin, silicone (meth)acrylate resin, epoxy (meth)acrylate resin, and the like).

Examples of the thermoplastic resin used for the protective layer 18 include phenoxy resin, polyethersulfone, polysulfone, polyphenylenesulfone, and the like.

The thickness of the protective layer 18 is not particularly limited but is preferably from 1 to 500 µm, more preferably from 3 to 200 µm, and even more preferably from 5 to 50 µm because a film mirror obtained is more excellent in weather resistance and flexibility.

The method to be used in step (2) of forming the protective layer on the silver reflective layer provided with the corrosion inhibitor is not particularly limited, and examples include the method in which the prescribed protective layer is affixed onto the silver reflective layer 14 provided with the corrosion inhibitor, and the method in which the curable resin composition described as above is applied onto the silver reflective layer 14 provided with the corrosion inhibitor and then photocuring by ultraviolet irradiation or hot curing by heating is carried out.

It is preferred that the protective layer 18 contain substantially no corrosion inhibitor. In particular, if the protective layer is formed of a curable resin composition, curing may be hindered by the corrosion inhibitor contained.

Furthermore, "contain substantially no corrosion inhibitor" means that the content of corrosion inhibitor is not greater than 0.02% by weight relative to the total weight of the protective layer 18, and a content not greater than 0.01% by weight is preferred.

The protective layer 18 may contain an ultraviolet absorber. The lightfastness of the film mirror will further be improved by an ultraviolet absorber contained.

The ultraviolet absorber is not particularly limited in type, and examples include organic ultraviolet absorbers such as a benzophenone-based one, a benzotriazole-based one, a phenyl salicylate-based one, a triazine-based one and a benzoate-based one, and inorganic ultraviolet absorbers such as titanium oxide, zinc oxide, cerium oxide and iron oxide. When a large amount of ultraviolet absorber is added, it is preferred that an ultraviolet absorber having a molecular weight of not less than 1000 (high-molecular-weight ultraviolet absorber) be used to reduce the problem of bleed-out. The molecular weight is preferably not less than 1000 but not greater than 3000.

Examples of benzophenone-based ultraviolet absorbers include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, 2,2',4,4'-tetrahydroxy-benzophenone, and the like.

Examples of benzotriazole-based ultraviolet absorbers include 2-(2'-hydroxy-5-methylphenyl)benzotriazole, 2-(2'-hydroxy-3',5'-di-t-butylphenyl)benzotriazole, 2-(2'-hydroxy-3'-t-butyl-5'-methylphenyl)benzotriazole, 2,2'-methylenebis[6-(2H-benzotriazol-2-yl)-4-(1,1,3,3-tetramethylbutyl)phenol] (molecular weight, 659; LA31 commercially available from ADEKA Corp., for example), 2-(2H-benzotriazol-2-yl)-4,6-bis(1-methyl-1-phenylethyl)phenol (molecular weight, 447.6; Tinuvin 234 commercially available from Ciba Specialty Chemicals K.K., for example), and the like.

Examples of phenyl salicylate-based ultraviolet absorbers include phenyl salicylate, 2-4-di-t-butylphenyl-3,5-di-t-butyl-4-hydroxybenzoate, and the like. Examples of hindered amine-based ultraviolet absorbers include bis(2,2,6,6-tetramethylpiperidin-4-yl)sebacate and the like.

Examples of triazine-based ultraviolet absorbers include 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine, [2-(4,6-diphenyl-1,3,5-triazin-2-yl)-5-(hexyl)oxyphenol] (Tinuvin 1577FF, trade name, manufactured by Ciba Specialty Chemicals), [2-[4,6-bis(2,4-dimethylphenyl)-1,3,5-triazin-2-yl]-5-(octyloxy)phenol] (CYASORB UV-1164, trade name, manufactured by Cytec Industries), and the like.

Examples of benzoate-based ultraviolet absorbers include 2,4-di-tert-butylphenyl-3,5-di-tert-butyl-4-hydroxybenzoate (molecular weight, 438.7; Sumisorb 400 commercially available from Sumitomo Chemical Co., Ltd., for example), and the like.

Apart from the above, compounds having the function of converting the energy possessed by ultraviolet rays to intramolecular vibrational energy and releasing that vibrational energy as thermal energy or the like may be used as ultraviolet absorbers. Additionally, a substance that exerts effects if used in combination with an antioxidant or a colorant, or a photostabilizer called a quencher that acts like a light energy converter may be used in combination.

Furthermore, two or more types of the above ultraviolet absorbers may be used as necessary. Also, ultraviolet absorbers other than those mentioned above, such as, for example, salicylic acid derivatives, substituted acrylonitriles, nickel complexes, benzophenone-based ultraviolet absorbers, triazine-based ultraviolet absorbers, and the like may be contained as necessary.

The content of ultraviolet absorber in the protective layer 18 is not particularly limited, but from the perspective of lightfastness and the adhesion of the protective layer 18, it is preferably from 0.1 to 20% by weight, and more preferably from 1 to 10% by weight relative to the total weight of the protective layer 18.

### [Film mirror]

The film mirror 10 can favorably be used for the purpose of collecting solar radiation (for solar radiation collection). In short, it is suitable for the use as a member for collecting solar radiation in solar cells, solar power generators, and the like.

### <Second embodiment>

A second embodiment of the film mirror of the present invention is described below in reference to the relevant drawing. FIG. 2 is a section view of the second embodiment of the film mirror of the present invention.

A film mirror 100 has a resin substrate 12, a primer layer 22, a silver reflective layer 14, a corrosion inhibitor 16, and a protective layer 18 in this order.

The film mirror 100 illustrated in FIG. 2 has the same configuration as that of the film mirror 10 illustrated in FIG. 1 except that it has the primer layer 22; therefore, the same reference signs are given to the same constituent elements, and descriptions thereof are omitted, and the primer layer 22 is primarily described in detail below.

### [Primer layer]

The primer layer 22 is disposed between the resin substrate 12 and the silver reflective layer 14, and increases the adhesion between the two.

The primer layer 22 is obtained by performing heat treatment and/or photoirradiation on a layer containing a polymer having a functional group that interacts with metal (particularly silver) and a polymerizable group.

First, the polymer used will be described in detail, and then the procedure for layer formation will be described in detail.

### (Polymer having functional group that interacts with metal and polymerizable group)

The polymer contains a functional group that interacts with metal (hereafter also referred to as "interactive group") and a polymerizable group. The interactive group is a group that interacts with the silver reflective layer 14, and has the role of increasing adhesion between the silver reflective layer 14 and the primer layer 22. The heat treatment and/or photoirradiation to be performed as described later causes a crosslinking reaction of the polymerizable group to proceed, so that the polymerizable group increases the strength of the primer layer 22, and partially reacts with the resin substrate 12 to increase adhesion between the resin substrate 12 and the primer layer 22.

The polymerizable group may be any functional group as long as it, by application of energy, can form a chemical bond with another polymerizable group or a chemical bond between the polymer and the resin substrate 12. Examples of the polymerizable group include radical-polymerizable groups, cationic-polymerizable groups, and the like. Radical-polymerizable groups are preferred from the perspective of reactivity.

Examples of radical-polymerizable groups include a methacryloyl group, an acryloyl group, an itaconate ester group, a crotonate ester group, an isocrotonate ester group, a maleate ester group, a styryl group, a vinyl group, an acrylamide group, a methacrylamide group, and the like. Among these, a methacryloyl group, an acryloyl group, a vinyl group, a styryl group, an acrylamide group, and a methacrylamide group are preferred, among which a methacryloyl group, an acryloyl group, an acrylamide group, and a methacrylamide group are more preferred from the perspective of radical polymerization reactivity and flexibility in synthesis, and an acrylamide group and a methacrylamide group are even more preferred from the perspective of alkali resistance.

The interactive group is not particularly limited in type provided that it is a group that interacts with metal. Examples include nitrogen-containing functional groups such as an amino group, an amido group, an imido group, a urea group, a tertiary amino group, an ammonium group, an amidino group, a triazine ring, a triazole ring, a benzotriazole group, an imidazole group, a benzimidazole group, a quinoline group, a pyridine group, a pyrimidine group, a pyrazine group, a quinazoline group, a quinoxaline group, a purine group, a triazine group, a piperidine group, a piperazine group, a pyrrolidine group, a pyrazole group, an aniline group, groups containing an alkylamine structure, groups containing an isocyanuric structure, a nitro group, a nitroso group, an azo group, a diazo group, an azido group, a cyano group, a cyanate group (R-O-CN), and the like; oxygen-containing functional groups such as an ether group, a hydroxy group, a phenolic hydroxy group, a carboxy group, a carbonate group, a carbonyl group, an ester group, groups containing an N-oxide structure, groups containing an S-oxide structure, groups containing an N-hydroxy structure, and the like; sulfur-containing functional groups such as a thiophene group, a thiol group, a thiourea group, a thiocyanuric acid group, a benzothiozole group, a mercaptotriazine group, a thioether group, a thioxy group, a sulfoxide group, a sulfone group, a sulfite group, groups containing a sulfoximine structure, groups containing a sulfonate salt structure, a sulfonic acid group, groups containing a sulfonic acid ester structure, and the like; phosphorus-containing functional groups such as a phosphate group, a phosphoramido group, a phosphine group, groups containing a phosphoric acid ester structure, and the like; and groups containing a halogen atom such as chlorine, bromine or the like. In functional groups that can take on a salt structure, salts thereof are also usable.

Among these, ionic polar groups such as a carboxy group, a sulfonic acid group, a phosphoric acid group and a boronic acid group, and non-dissociative functional groups such as an ether group or a cyano group are more preferred because of their high polarity and superior ability to adsorb to metals.

From the perspectives of making polymer synthesis easier and further improving adhesion of the silver reflective layer 14, it is preferred that the polymer include a unit (repeating unit) represented by formula (1) below and a unit represented by formula (2).

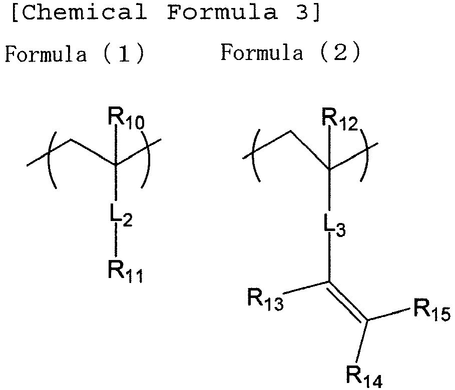

In formula (1), R₁₀ denotes hydrogen or an alkyl group (for example, a methyl group, an ethyl group, or the like).

In formula (1), L₂ denotes a single bond or a divalent linking group. Examples of the divalent linking group include divalent aliphatic hydrocarbon groups (preferably having from 1 to 8 carbon atoms, and more preferably from 1 to 5 carbon atoms), divalent aromatic hydrocarbon groups (preferably having from 6 to 12 carbon atoms), -O-, -S-, - SO₂-, -N(R)- (wherein R is an alkyl group), -CO-, -NH-, -COO-, -CONH-, and a group in which those are combined (for example, an alkyleneoxy group, an alkyleneoxycarbonyl group, an alkylenecarbonyloxy group or the like).

Examples of the divalent aliphatic hydrocarbon groups (for example, alkylene groups) include a methylene group, an ethylene group, a propylene group, a butylene group, and the like.

Examples of the divalent aromatic hydrocarbon groups include a phenylene group, a naphthylene group, and the like.

In formula (1), R₁₁ denotes an interactive group. The definition of the interactive group is as described above.

Furthermore, the polymer may contain two or more kinds of units represented by formula (1) having different interactive groups denoted by R₁₁. For example, a unit represented by formula (1) in which R₁₁ is an ionic polar group and a unit represented by formula (2) in which R₁₁ is a non-dissociative functional group may be included in the polymer.

In formula (2), R₁₂ to R₁₅ each independently denote a hydrogen atom or an optionally substituted alkyl group.

When R₁₂ to R₁₅ are optionally substituted alkyl groups, alkyl groups having from 1 to 6 carbon atoms are preferred, and alkyl groups having from 1 to 4 carbon atoms are more preferred. More specifically, examples of unsubstituted alkyl groups include a methyl group, an ethyl group, a propyl group, and a butyl group. Examples of substituted alkyl groups include a methyl group, an ethyl group, a propyl group, and a butyl group substituted with a methoxy group, a hydroxy group, or a halogen atom (for example, a chlorine atom, a bromine atom, or a fluorine atom) and the like.

Furthermore, as R₁₂, a hydrogen atom, a methyl group, or a methyl group substituted with a hydroxy group or bromine atom is preferred. As R₁₃, a hydrogen atom, a methyl group, or a methyl group substituted with a hydroxy group or bromine atom is preferred. As R₁₄, a hydrogen atom is preferred. As R₁₅, a hydrogen atom is preferred.

In formula (2), L₃ denotes a single bond or a divalent linking group. The definition of the divalent linking group is the same as the definition of the linking group in L₂ in formula (1) above.

The most preferred range of the polymer includes a copolymer containing a unit represented by formula (A), a unit represented by formula (B) and a unit represented by formula (C), a copolymer containing a unit represented by formula (A) and a unit represented by formula (B), and a copolymer containing a unit represented by formula (A) and a unit represented by formula (C).

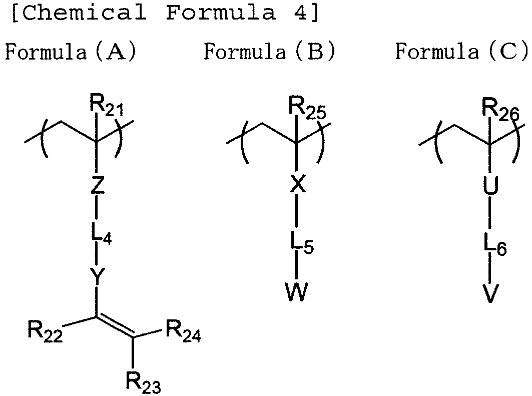

In the above formulas (A) to (C), R₂₁ to R₂₆ each independently denote a hydrogen atom or an optionally substituted alkyl group having from 1 to 4 carbon atoms. X, Y, Z, and U each independently denote a single bond or a divalent linking group. L₄, L₅, and L₆ each independently denote a single bond or a divalent linking group. W denotes a non-dissociative interactive group (non-dissociative functional group). V denotes an ionic polar group. The definition of the linking group is as described above.

In the unit represented by formula (A), it is preferable that Y and Z are each independently an ester group, an amido group, or a phenylene group (-C₆H₄-). L₄ is preferably an optionally substituted divalent organic group (hydrocarbon group in particular) having from 1 to 10 carbon atoms.

In the unit represented by formula (B), W is preferably a cyano group or an ether group. X and L₅ are both preferably single bonds.

In the unit represented by formula (C), V is preferably a carboxylic acid group. The mode in which V is a carboxylic acid group and L₆ contains a four- to eight-membered ring structure in a portion linked to V is preferred, and the mode in which V is a carboxylic acid group and the chain length of L₆ is from 6 to 18 atoms is also preferred. Additionally, in the unit represented by formula (C), the mode in which V is a carboxylic acid group and U and L₆ are single bonds is also preferred. Among others, the mode in which V is a carboxylic acid group and U and L₆ are both single bonds is most preferred.

The contents of units represented by formulas (A) to (C) are preferably in the following ranges.

Specifically, in the case of a copolymer containing a unit represented by formula (A), a unit represented by formula (B) and a unit represented by formula (C), the ratio of unit represented by formula (A) : unit represented by formula (B) : unit represented by formula (C) is preferably from 5 to 50 mol% : from 5 to 40 mol% : from 20 to 70 mol%, and more preferably from 10 to 40 mol% : from 10 to 35 mol% : from 20 to 60 mol%.

In the case of a copolymer containing a unit represented by formula (A) and a unit represented by formula (B), the ratio of unit represented by formula (A) : unit represented by formula (B) is preferably from 5 to 50 mol% : from 50 to 95 mol%, and more preferably from 10 to 40 mol% : from 60 to 90 mol%.

In the case of a copolymer containing a unit represented by formula (A) and a unit represented by formula (C), the ratio of unit represented by formula (A) : unit represented by formula (C) is preferably from 5 to 50 mol% : from 50 to 95 mol%, and more preferably from 10 to 40 mol% : from 60 to 90 mol%.

In these ranges, an improvement in ease of polymerization of the polymer by heat treatment or photoirradiation, a decrease in resistance of the primer layer 22, an improvement in moisture-resistant adhesion force, and the like are achieved.

The method for forming a layer containing the above polymer is not particularly limited, and a known method may be employed. One example is a method in which a composition for forming the layer containing the above polymer is applied to the resin substrate 12 and then dried as necessary to form the layer.

On the layer containing the above polymer, heat treatment and/or photoirradiation is performed. The treatment to be performed on the layer containing the polymer may be one or both of heat treatment and photoirradiation. If both treatments are performed, they may be performed in separate steps or simultaneously.

By performing such treatments, the polymerizable group is activated and reactions between polymerizable groups and between the polymerizable group and the resin substrate 12 proceed, and adhesion between the resin substrate 12 and the primer layer 22 improves.

The optimal heat treatment conditions are selected according to the type of polymer used, but it is preferable that treatment be performed at a temperature of from 60 to 150°C (more preferably from 80 to 120°C) for from 0.1 to 3 hours (more preferably from 0.5 to 2 hours) from the perspectives that crosslink density of the primer layer 22 is higher and weather resistance and flexibility of the film mirror are superior.

The optimal photoirradiation conditions are selected according to the type of polymer used, but it is preferable that the exposure quantity be from 10 to 8000 mJ/cm², and preferably from 100 to 3000 mJ/cm², from the perspectives that crosslink density of the primer layer 22 is higher and weather resistance and flexibility of the film mirror are superior.

Furthermore, the light source used in exposure is not particularly limited, and may be, for example, a mercury lamp, metal halide lamp, xenon lamp, chemical lamp, carbon arc lamp, or the like. The irradiation rays may be an electron beam, X-rays, an ion beam, far-infrared rays, or the like.

The thickness of the primer layer 22 is not particularly limited but is preferably from 0.05 to 10 µm, and more preferably from 0.3 to 5 µm, because the film mirror is more excellent in weather resistance and flexibility.

In the second embodiment, when the silver reflective layer 14 is formed on the primer layer 22, a catalyst addition step, in which a plating catalyst or precursor thereof is added to the primer layer 22, and a plating step, in which silver plating is performed on the primer layer 22 to which the plating catalyst or precursor thereof has been added, are preferably implemented. The silver reflective layer 14 formed by implementing these steps has better adhesion to the primer layer 22. In short, the primer layer 22 functions as a plating undercoat layer.

The procedures of these steps will be described in detail below.

### (Catalyst addition step)

The catalyst addition step is a step in which a plating catalyst or precursor thereof is added to the primer layer 22. In this step, the interactive group of the primer layer 22 adsorbs the added plating catalyst or precursor thereof according to its function. For example, when a metal ion is used as a plating catalyst precursor, the metal ion adsorbs to the primer layer 22.

Examples of the plating catalyst or precursor thereof include those which function as a catalyst or as an electrode in the plating step to be described later. For this reason, the plating catalyst or precursor thereof is determined depending on the type of the plating to be performed in the plating step.

The plating catalyst or precursor thereof that is used will be described in detail below.

Any electroless plating catalyst can be used provided that it serves as an active nucleus during electroless plating. Metals having the catalytic activity of autocatalytic reduction reaction (known as metals having an ionization tendency lower than that of Ni and being susceptible of electroless plating) are specifically mentioned as exemplary electroless plating catalysts, with more specific examples including Pd, Ag, Cu, Ni, Al, Fe and Co. Among others, those capable of multidentate coordination are preferred, and Pd is particularly preferred because it can be coordinated with various functional groups and has a high catalytic activity.

Any electroless plating catalyst precursor can be used without particular limitation provided that it is able to become an electroless plating catalyst through chemical reaction. Primarily, a metal ion of the metal mentioned above as an electroless plating catalyst is used. The metal ion that is the electroless plating catalyst precursor becomes zerovalent metal, which is an electroless plating catalyst, by a reduction reaction. The metal ion which has been added to the primer layer 22 as an electroless plating catalyst precursor may be converted into zerovalent metal as an electroless plating catalyst through a separate reduction reaction before the immersion in an electroless plating bath, or converted into metal (as an electroless plating catalyst) with a reducing agent in the electroless plating bath when the primer layer with the metal ion as an electroless plating catalyst precursor is immersed as such in the electroless plating bath.

The metal ion that is the electroless plating catalyst precursor is preferably added to the primer layer 22 using a metal salt. The metal salt used is not particularly limited provided that it is dissociated into a metal ion and a base (anion) when dissolved in an appropriate solvent. Examples include M(NO₃)ₙ, MClₙ, M_{2/n}(SO₄), M_{3/n}(PO₄)Pd(OAc)ₙ (M denoting an n-valent metal atom), and the like. As the metal ion, one obtained by dissociating the above metal salts may be advantageously used. Specific examples include an Ag ion, a Cu ion, an Al ion, a Ni ion, a Co ion, an Fe ion, and a Pd ion. Among others, those capable of multidentate coordination are preferred, and an Ag ion, a Cu ion and a Pd ion are particularly preferred because each of them can be coordinated with various functional groups and has a high catalytic activity.

Furthermore, by preparing a catalyst activating solution (reducing solution), reduction of the electroless plating catalyst precursor prior to the plating step can be performed as a separate step before the electroless plating. The catalyst activating solution often contains a reducing agent that can reduce the electroless plating catalyst precursor (primarily a metal ion) to zerovalent metal, and a pH adjusting agent for activating the reducing agent.

The concentration of reducing agent relative to the total solution is preferably from 0.1 to 50% by weight, and more preferably from 1 to 30% by weight.

Boron-based reducing agents such as sodium borohydride and dimethylamine borane, and reducing agents such as formaldehyde, hypophosphorous acid, and the like may be used as the reducing agent.

Reduction with an alkaline aqueous solution containing formaldehyde is particularly preferred.

Furthermore, catalysts used for directly performing electroplating without performing electroless plating may be used as a plating catalyst. Examples of such catalysts include zerovalent metals, and more specifically, Pd, Ag, Cu, Ni, Al, Fe, Co, and the like. Among others, those capable of multidentate coordination are preferred, and Pd, Ag and Cu are particularly preferred because of their high capability in adsorbing (attaching) to interactive groups and high catalytic activity.

The method for adding a plating catalyst or precursor thereof to the primer layer 22 may be a method wherein a solution containing a plating catalyst or precursor thereof (for example, a dispersion in which a metal is dispersed in an appropriate dispersion medium, or a solution containing a metal ion that is prepared by dissolving and dissociating a metal salt in an appropriate solvent) is prepared, and the dispersion or solution is applied onto the primer layer 22, or the resin substrate 12 with the primer layer 22 formed thereon is immersed in the dispersion or solution.

### (Plating step)

The plating step is a step in which the silver reflective layer 14 is formed by silver plating on the primer layer 22 to which the plating catalyst or precursor thereof was added.
The plating to be performed in the plating step may be electroless plating or electroplating, and can be selected as appropriate depending on the function of the plating catalyst or precursor thereof added to the primer layer 22 in the catalyst addition step. In short, in this step, electroplating or electroless plating may be performed on the primer layer 22 to which the plating catalyst or precursor thereof was added.

A plating process that is advantageously performed in this step will be described below.

Electroless plating refers to an operation of depositing silver by a chemical reaction using a solution in which silver ions are dissolved.

Electroless plating is performed by, for example, cleaning the resin substrate 12 having the primer layer 22, to which an electroless plating catalyst was added, with water to remove excess electroless plating catalyst (metal), and then immersing it in an electroless plating bath. A known electroless plating bath may be used as the electroless plating bath.

In the case where the resin substrate 12 having the primer layer 22, to which an electroless plating catalyst precursor was added, is immersed in an electroless plating bath in the state where the electroless plating catalyst precursor is adsorbing to or impregnated in the primer layer 22, it is preferred that the substrate be cleaned to remove excess precursor (metal salt or the like) and then immersed in the electroless plating bath. In this case, reduction of the plating catalyst precursor and the subsequent electroless plating are performed in the electroless plating bath. Similar to the above, a known electroless plating bath may be used as the electroless plating bath.

In this step, if the added plating catalyst or precursor thereof has a function as an electrode, electroplating can be performed on the primer layer 22 to which the plating catalyst or precursor thereof was added.

A conventional method may be used as the electroplating method.

Additionally, after the above-described electroless plating, electroplating may be further performed using the formed silver plating film as an electrode.

Examples of silver compounds used in plating include silver nitrate, silver acetate, silver sulfate, silver carbonate, silver methanesulfonate, ammoniacal silver, silver cyanide, silver thiocyanate, silver chloride, silver bromide, silver chromate, silver chloranilate, silver salicylate, silver diethyldithiocarbamate, diethyldithiocarbamic acid silver salt, and silver p-toluenesulfonate.

### EXAMPLES

The present invention will be described in further detail in reference to the following Examples, to which the present invention is not limited.

### <Working Example A>

### <Example 1>

On a PET support body (PET film) (A4300; Toyobo Co., Ltd.), a solution containing the acrylic polymer represented by the formula below was applied by spin-coating to a thickness of 0.5 µm and dried at 80°C for 5 minutes to produce a coating film.

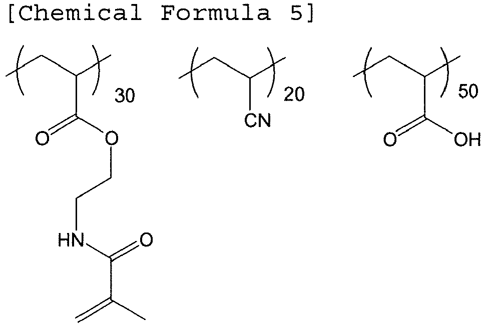

The method for synthesizing the acrylic polymer represented by the above formula is as follows.

### (Synthesis example)

One liter of ethyl acetate and 159 g of 2-aminoethanol were introduced into a 2-L three-necked flask and cooled in an ice bath. To this, 150 g of 2-bromoisobutyric acid bromide was added dropwise while adjusting to an internal temperature of not greater than 20°C. Then, the internal temperature was raised to room temperature (25°C), and the mixture was reacted for 2 hours. After the reaction ended, it was quenched by adding 300 mL of distilled water. The ethyl acetate phase was then cleaned four times with 300 mL of distilled water and dried with magnesium sulfate, and ethyl acetate was distilled out to produce 80 g of starting material A.

Then, 47.4 g of starting material A, 22 g of pyridine, and 150 mL of ethyl acetate were introduced into a 500-mL three-necked flask and cooled in an ice bath. To this, 25 g of acryloyl chloride was added dropwise while adjusting to an internal temperature of not greater than 20°C. Then, the temperature was raised to room temperature, and the mixture was reacted for 3 hours. After the reaction ended, 300 mL of distilled water was added and the reaction was quenched. The ethyl acetate phase was then cleaned four times with 300 mL of distilled water and dried with magnesium sulfate, and ethyl acetate was distilled out. The following monomer M1 was obtained in an amount of 20 g through purification by column chromatography.

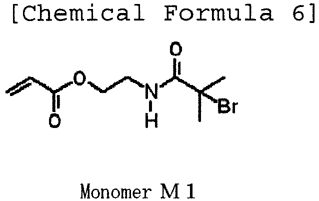

8 g of N,N-dimethylacetamide was introduced into a 500-mL three-necked flask and heated to 65°C under nitrogen flow. To this, a solution containing 14.3 g of the monomer M1 obtained above, 3.0 g of acrylonitrile (Tokyo Chemical Industry Co., Ltd.), 6.5 g of acrylic acid (Tokyo Chemical Industry Co., Ltd.), 0.4 g of V-65 (Wako Pure Chemical Industries, Ltd.), and 8 g of N,N-dimethylacetamide was added dropwise over a period of 4 hours. After dropwise addition was complete, the mixture was stirred for another 3 hours. Then, additional 41 g of N,N-dimethylacetamide was added, and the reaction solution was cooled to room temperature. To this reaction solution, 0.09 g of 4-hydroxy-TEMPO (Tokyo Chemical Industry Co., Ltd.) and 54.8 g of DBU were added, and the solution was reacted at room temperature for 12 hours. Then, 54 g of 70 wt% methanesulfonic acid aqueous solution was added to the reaction solution. After the completion of the reaction, 12 grams of the acrylic polymer represented by the above formula (weight average molecular weight, 53,000) was obtained by re-precipitation in water followed by isolation of the solids.

Also, the method of preparation for the solution containing the acrylic polymer represented by the above formula is as follows.

The acrylic polymer represented by the above formula (7 parts by weight), 1-methoxy-2-propanol (74 parts by weight), and water (19 parts by weight) were mixed, and a photopolymerization initiator (Esacure KTO-46; Lamberti Corp.) (0.35 parts by weight) was added to this mixed solution, then stirred to mix.

The obtained coating film was then irradiated with an accumulated exposure quantity of 1000 mJ/cm² at a wavelength of 254 nm using a UV exposure device (model UVF-502S with a lamp UXM-501MD) manufactured by San-ei Electric Co., Ltd., so as to form a primer layer (thickness, 500 nm).

The obtained PET support body with primer layer (resin substrate with primer layer) was immersed for 5 minutes in 1 wt% sodium hydrogen carbonate aqueous solution, and was then cleaned with pure water.

Next, the resin substrate with primer layer was immersed for 5 minutes in 1 wt% silver nitrate aqueous solution and then cleaned with pure water, and the electroless plating catalyst precursor (silver ion) was added to the primer layer.

Subsequently, the resin substrate with primer layer was immersed in an alkaline aqueous solution (pH 12) containing 40 mmol/L NaOH and 2.2 wt% formalin (solution serving as a reducing agent), then cleaned with pure water, so as to provide silver inside the primer layer.

Then, the following electroplating process was performed on the primer layer as provided with reduced silver, and a silver reflective layer (thickness, 100 nm) was produced.

DAIN Silver Bright PL-50 (Daiwa Fine Chemicals Co., Ltd.) adjusted to pH 9.0 using 8 M potassium hydroxide was used as the electroplating solution. The resin substrate with primer layer having reduced silver on the surface was immersed in the electroplating solution and plated for 20 seconds at 0.5 A/dm², and was then cleaned under flowing pure water for 1 minute.

As post-electroplating processing, the resin substrate with primer layer after plating was immersed for 90 seconds in a 10 wt% aqueous solution of DAIN Silver ACC (Daiwa Fine Chemicals Co., Ltd.), and was then cleaned under flowing pure water for 1 minute. A resin substrate-silver reflective layer combination was thus obtained.

The resin substrate-silver reflective layer combination was immersed in a solution (solvent: water), in which 3-mercapto-1,2,4-triazole was dissolved, for 3 minutes in a room-temperature environment (immersion process). The content of 3-mercapto-1,2,4-triazole in the solution was 0.1% by weight relative to the total amount of solution.

After immersion, the surface of the silver reflective layer of the resin substrate-silver reflective layer combination was cleaned using water (cleaning process).

The attached amount of corrosion inhibitor after cleaning was calculated by a method using 25% HCl. More specifically, the resin substrate-silver reflective layer combination as provided with the corrosion inhibitor was immersed in 25% HCl to leach out the corrosion inhibitor, and the attached amount was calculated by measuring the UV absorption spectrum with a UV-3100 (Shimadzu Corp.). Results are shown in Table 1.

A coating solution was prepared under the following conditions. The OC coating solution (composition for protective layer formation) as specified below was applied with a coating bar onto the surface of the silver reflective layer as provided with the corrosion inhibitor, and after drying for 1 minute at 80°C, it was cured by ultraviolet irradiation to form a protective layer approximately 20 µm thick.

| (OC coating solution (overcoat coating solution)) | (wt%) |
|---|---|
| DEFENSA FH-700 (DIC Corp.) | 45.00 |
| Silica dispersed in isopropyl alcohol (IPA) (IPA-ST; Nissan Chemical Industries, Ltd.) | 16.67 |
| Isopropyl alcohol | 38.33 |

### (Adhesion evaluation)

In the protective layer of the obtained film mirror, vertical and horizontal cuts reaching the base surface, each 11 in number, were made in a grid pattern with 1-mm spacing using a cutter, and pressure-sensitive adhesive tape (Cellotape (registered trademark) conforming to JIS K 5400) was stuck to the protective layer as such and then peeled off. Subsequently, the state of adhesion of the protective layer to the resin substrate was observed macroscopically and evaluated according to the following criteria. From a practical standpoint, A or B is required.
"A": No squares were peeled.
"B": From 1 to 74 squares were peeled.
"C": Not less than 75 squares were peeled.

### (Lightfastness evaluation)

The obtained film mirror was placed in a xenon lamp lightfastness tester (Ci5000 manufactured by Atlas Material Testing Technology LLC; power, 180 W; black panel temperature, 83°C) and left to stand for 500 hours at a temperature of 55°C and a humidity of 50% RH, and then the reduction in reflectance at 450 nm (reflectance before being left to stand (%) minus reflectance after being left to stand (%)) of the film mirror was evaluated. Reflectance was measured using an ultraviolet-visible-near infrared spectrophotometer UV-3100 (Shimadzu Corp.).

Lightfastness was evaluated according to the following criteria. Lightfastness evaluation results are shown in Table 1. From a practical standpoint, A to C are preferred.
"A": Reflectance reduction was less than 3%.
"B": Reflectance reduction was not less than 3% but less than 5%.
"C": Reflectance reduction was not less than 5% but less than 100.
"D": Reflectance reduction was not less than 10%.

### <Example 2>

A film mirror was produced and evaluated according to the procedure of Example 1 except that benzotriazole was used instead of 3-mercapto-1,2,4-triazole. Results are shown in Table 1.

### <Example 3>

A film mirror was produced and evaluated according to the procedure of Example 1 except that 1,2,4-triazole was used instead of 3-mercapto-1,2,4-triazole. Results are shown in Table 1.

### <Example 4>

A film mirror was produced and evaluated according to the procedure of Example 1 except that 3,5-diamino-1,2,4-triazole was used instead of 3-mercapto-1,2,4-triazole. Results are shown in Table 1.

### <Example 5>

A film mirror was produced and evaluated according to the procedure of Example 1 except that 5,6-dimethylbenzimidazole was used instead of 3-mercapto-1,2,4-triazole. Results are shown in Table 1.

### <Example 6>

A film mirror was produced and evaluated according to the procedure of Example 1 except that 1,3,4-thiadiazole-2,5-dithiol was used instead of 3-mercapto-1,2,4-triazole. Results are shown in Table 1.

### <Example 7>

A film mirror was produced and evaluated according to the procedure of Example 1 except that tetrakis(7-mercapto-2,5-dithiaheptyl)methane was used instead of 3-mercapto-1,2,4-triazole. Results are shown in Table 1.

### <Example 8>

A film mirror was produced and evaluated according to the procedure of Example 1 except that 2,4-bis(octylthiomethyl)-6-methylphenol was used instead of 3-mercapto-1,2,4-triazole. Results are shown in Table 1.

### <Example 9>

A film mirror was produced and evaluated according to the procedure of Example 1 except that thiourea was used instead of 3-mercapto-1,2,4-triazole. Results are shown in Table 1.

### <Example 10>

A film mirror was produced and evaluated according to the procedure of Example 1 except that glycol dimercaptoacetate was used instead of 3-mercapto-1,2,4-triazole. Results are shown in Table 1.

### <Example 11>

A film mirror was produced and evaluated according to the procedure of Example 1 except that a UV absorber was not used. Results are shown in Table 1.

### <Example 12>

A film mirror was produced and evaluated according to the procedure of Example 1 except that the thickness of the protective layer was changed from 20 µm to 3 µm. Results are shown in Table 1.

### <Example 13>

A film mirror was produced and evaluated according to the procedure of Example 1 except that the thickness of the protective layer was changed from 20 µm to 10 µm. Results are shown in Table 1.

### <Example 14>

A film mirror was produced and evaluated according to the procedure of Example 1 except that the content of 3-mercapto-1,2,4-triazole in the solution was changed to 0.5% by weight relative to the total amount of solution, and the immersion time was changed to 15 minutes. Results are shown in Table 1.

### <Example 15>

A film mirror was produced and evaluated according to the procedure of Example 1 except that the cleaning process was not performed after the immersion process. Results are shown in Table 1.

### <Example 16>

A film mirror was produced and evaluated according to the procedure of Example 1 except that a solution in which 3-mercapto-1,2,4-triazole was dissolved was applied onto the silver reflective layer of the resin substrate-silver reflective layer combination (coating process) instead of performing the immersion process and the cleaning process. Results are shown in Table 1.

### <Comparative Example 1>

A film mirror was produced and evaluated according to the procedure of Example 1 except that the content of 3-mercapto-1,2,4-triazole in the solution was changed to 0.01% by weight relative to the total amount of solution, and the immersion time was changed to 0.1 minutes. Results are shown in Table 1.

### <Comparative Example 2>

A film mirror was produced and evaluated according to the procedure of Example 16 except that the content of 3-mercapto-1,2,4-triazole in the solution was changed to 1.0% by weight relative to the total amount of solution. Results are shown in Table 1.

### <Comparative Example 3>

A film mirror was produced and evaluated according to the procedure of Example 1 except that a protective layer forming process in which 3-mercapto-1,2,4-triazole was added in the OC coating solution at the concentration as shown in Table 1 was performed instead of performing the immersion process, the cleaning process, and the protective layer forming process as described before. Results are shown in Table 1.

### <Comparative Example 4>

A film mirror was produced and evaluated according to the procedure of Comparative Example 3 except that the used amount of 3-mercapto-1,2,4-triazole was changed from 0.03 wt% to 0.3 wt%. Results are shown in Table 1.

### <Comparative Example 5>

A film mirror was produced and evaluated according to the procedure of Comparative Example 3 except that the used amount of 3-mercapto-1,2,4-triazole was changed from 0.03 wt% to 3.0 wt%. Results are shown in Table 1.

### <Comparative Example 6>

A film mirror was produced and evaluated according to the procedure of Comparative Example 5 except that tetrakis(7-mercapto-2,5-dithiaheptyl)methane was used instead of 3-mercapto-1,2,4-triazole. Results are shown in Table 1.

### <Comparative Example 7>

A film mirror was produced and evaluated according to the procedure of Comparative Example 5 except that 1,2,4-triazole was used instead of 3-mercapto-1,2,4-triazole. Results are shown in Table 1.

### <Comparative Example 8>

A film mirror was produced and evaluated according to the procedure of Comparative Example 5 except that benzimidazole was used instead of 3-mercapto-1,2,4-triazole. Results are shown in Table 1.

### <Comparative Example 9>

A film mirror was produced and evaluated according to the procedure of Comparative Example 5 except that 3,5-diamino-1,2,4-triazole was used instead of 3-mercapto-1,2,4-triazole. Results are shown in Table 1.

### <Comparative Example 10>

A film mirror was produced and evaluated according to the procedure of Comparative Example 5 except that 5,6-dimethylbenzimidazole was used instead of 3-mercapto-1,2,4-triazole. Results are shown in Table 1.

### <Comparative Example 11>

A film mirror was produced and evaluated according to the procedure of Comparative Example 5 except that 1,3,4-thiadiazole-2,5-dithiol was used instead of 3-mercapto-1,2,4-triazole. Results are shown in Table 1.

### <Comparative Example 12>

A film mirror was produced and evaluated according to the procedure of Comparative Example 5 except that 2,4-bis(octylthiomethyl)-6-methylphenol was used instead of 3-mercapto-1,2,4-triazole. Results are shown in Table 1.

### <Comparative Example 13>

A film mirror was produced and evaluated according to the procedure of Comparative Example 5 except that thiourea was used instead of 3-mercapto-1,2,4-triazole. Results are shown in Table 1.

### <Comparative Example 14>

A film mirror was produced and evaluated according to the procedure of Comparative Example 5 except that glycol dimercaptoacetate was used instead of 3-mercapto-1,2,4-triazole. Results are shown in Table 1.

### <Comparative Example 15>

A film mirror was produced and evaluated according to the procedure of Example 1 except that a protective layer was formed without performing the immersion process and the cleaning process. Results are shown in Table 1.

The obtained film mirror did not include a corrosion inhibitor.

In Table 1, "Adsorbed amount" indicates the total amount of corrosion inhibitor on the surface and in the surface layer of the silver reflective layer in Examples 1 to 16 and Comparative Examples 1 and 2, while in Comparative Examples 3 to 15, it indicates the amount (mg/m²) of corrosion inhibitor in the protective layer and the content (wt%) of corrosion inhibitor in the protective layer.

In Table 1, under "Adsorption mode," "Immerse" means the immersion process, "Clean" means the cleaning process, "Coat" means the coating process, and "Knead in" means a process wherein corrosion inhibitor is dispersed in the protective layer.

[Table 1]

**Table 1**

| | Corrosion inhibitor | | Adsorption mode (step) | Protectiv e layer thickness | UV absorber added ? | Evaluation | |
|---|---|---|---|---|---|---|---|
| | Type | Attached amount (mg/m²) | | | | Adhesio n | Lightfastness |
| EX 1 | 3-Mercapto-1,2,4-triazole | 1.3 | Immerse→ clean | 20*µ*m | Yes | A | B |
| EX 2 | Benztriazole | 1.5 | Immerse→ clean | 20*µ*m | Yes | A | B |
| EX 3 | 1,2,4-Triazole | 1 | Immerse→ clean | 20*µ*m | Yes | A | B |
| EX 4 | 3,5-Diamino-1,2,4-triazole | 1.2 | Immerse→ clean | 20*µ*m | Yes | A | A |
| EX 5 | 5,6-Dimethylbenzimidazole | 1.4 | Immerse→ clean | 20*µ*m | Yes | A | B |
| EX 6 | 1,3,4-Thiadiazole-2,5-dithiol | 1.5 | Immerse→ clean | 20*µ*m | Yes | A | B |
| EX 7 | Tetrakis(7-mercapto-2,5-dithiaheptyl)methane | 3.5 | Immerse→ clean | 20*µ*m | Yes | A | A |
| EX 8 | 2,4-Bis(octylthiomethyl)-6-methylphenol | 3.2 | Immerse→ clean | 20*µ*m | Yes | A | A |
| EX 9 | Thiourea | 0.9 | Immerse→ clean | 20*µ*m | Yes | A | B |
| EX 10 | Glycol dimercaptoacetate | 1.3 | Immerse→ clean | 20*µ*m | Yes | A | B |
| EX 11 | 3-Mercapto-1,2,4-triazole | 1.5 | Immerse→ clean | 20*µ*m | No | A | C |
| EX 12 | 3-Mercapto-1,2,4-triazole | 1.5 | Immerse→ clean | 3*µ*m | Yes | A | C |
| EX 13 | 3-Mercapto-1,2,4-triazole | 1.5 | Immerse→ clean | 10*µ*m | Yes | A | A |
| EX 14 | 3-Mercapto-1,2,4-triazole | 6 | Immerse→ clean | 20*µ*m | Yes | A | A |
| EX 15 | 3-Mercapto-1,2,4-triazole | 9 | Immerse only | 20*µ*m | Yes | B | A |
| EX 16 | 3-Mercapto-1,2,4-triazole | 10 | Coat | 20*µ*m | Yes | B | A |
| CEX 1 | 3-Mercapto-1,2,4-triazole | 0.05 | Immerse→ clean | 20*µ*m | Yes | A | D |
| CEX 2 | 3-Mercapto-1,2,4-triazole | 15 | Coat | 20*µ*m | Yes | C | B |
| CEX 3 | 3-Mercapto-1,2,4-triazole | 1.5 (0.03wt%) | OC mix | 20*µ*m | Yes | A | D |
| CEX 4 | 3-Mercapto-1,2,4-triazole | 15 (0.3wt%) | OC mix | 20*µ*m | Yes | B | D |
| CEX 5 | 3-Mercapto-1,2,4-triazole | 150 (3wt%) | OC mix | 20*µ*m | Yes | C | C |
| CEX 6 | Tetrakis(7-mercapto-2,5-dithiaheptyl)methane | 150 (3wt%) | OC mix | 20*µ*m | Yes | C | D |
| CEX 7 | 1,2.4-Triazole | 150 (3wt%) | OC mix | 20*µ*m | Yes | C | D |
| CEX 8 | Benztriazole | 150 (3wt%) | OC mix | 20*µ*m | Yes | C | C |
| CEX 9 | 3,5-Diamino-1,2,4-triazole | 150 (3wt%) | OC mix | 20*µ*m | Yes | C | D |
| CEX 10 | 5,6-Dimethylbenzimidazole | 150 (3wt%) | OC mix | 20*µ*m | Yes | C | C |
| CEX 11 | 1,3,4-Thiadiazole-2,5-dithiol | 150 (3wt%) | OC mix | 20*µ*m | Yes | C | C |
| CEX 12 | 2,4-Bis(octylthiomethyl)-6-methylphenol | 150 (3wt%) | OC mix | 20*µ*m | Yes | C | D |
| CEX 13 | Thiourea | 150 (3wt%) | OC mix | 20*µ*m | Yes | C | D |
| CEX 14 | Glycol dimercaptoacetate | 150 (3wt%) | OC mix | 20*µ*m | Yes | C | D |
| CEX 15 | - | - | - | 20*µ*m | Yes | A | D |

As shown in Table 1, the film mirror of the present invention exhibits excellent lightfastness, and the protective layer exhibits excellent adhesion.

As shown in Examples 4, 7, and 8, it was confirmed that lightfastness is better when a compound represented by formula (F), formula (I) or formula (J) is used.

Additionally, as is understood from a comparison of Example 1 and Example 11, it was confirmed that lightfastness is better when the protective layer contains an ultraviolet absorber.

Also, as is understood from a comparison of Example 12 and Example 13, it was confirmed that lightfastness is better when the thickness of the protective layer is not less than 10 µm.

Furthermore, as is understood from a comparison of Example 14 and Example 15, it was confirmed that adhesion is better when the attached amount of corrosion inhibitor is not greater than 6.0 mg/m².

On the other hand, in Comparative Examples 1 and 2, in which the amount of corrosion inhibitor was outside the specified range, lightfastness or adhesion was poor.

Furthermore, lightfastness or adhesion was also poor in Comparative Examples 3 to 14, in which the protective layer contained corrosion inhibitor.

Additionally, lightfastness was poor in Comparative Example 15, in which no corrosion inhibitor was used.

### <Working Example B>

### <Example 21>

### (Production of PET film having silver reflective layer formed thereon)

A coating solution for primer layer formation was prepared by adding and stirring a surfactant (F-780-F; 30% solids; DIC Corp.) (0.16 parts by weight) and a photopolymerization initiator (Esacure KTO-46; Lamberti Corp.) (0.35 parts by weight) in a mixture solution of the acrylic polymer represented by the formula below (22.02 parts by weight), 1-methoxy-2-propanol (72.73 parts by weight), and cyclohexanone (4.74 parts by weight).

Furthermore, the acrylic polymer was produced by the synthesis method described in the above Working Example A.

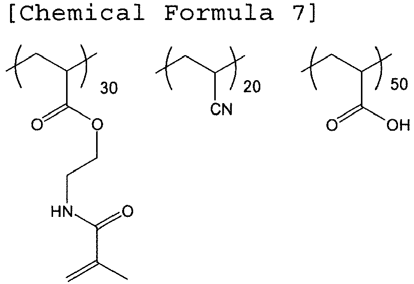

The coating solution for primer layer formation described above was applied onto a PET film (A4300; Toyobo Co., Ltd.) by bar coating, dried for 5 minutes at 25°C, and then dried for 5 minutes at 80°C to produce a coating film.

The above coating film was irradiated with an accumulated exposure quantity of 600 mJ/cm² at a wavelength of 254 nm using a UV exposure device (model UVF-502S with a lamp UXM-501MD) manufactured by San-ei Electric Co., Ltd., so as to form a primer layer (thickness, 0.55 µm). The PET film with primer layer described above was immersed for 5 minutes in 1 wt% sodium hydrogen carbonate aqueous solution, and unreacted polymer was removed from the primer layer. The PET film with primer layer was then cleaned with pure water, and then additionally air-dried.

Next, the PET film with primer layer described above was immersed for 5 minutes in a 1 wt% silver nitrate aqueous solution, and then cleaned with pure water and air-dried to produce a PET film with a primer layer to which silver ions were added.

The PET film with primer layer to which silver ions were added was immersed in an alkaline aqueous solution containing 0.14 wt% NaOH and 0.25 wt% formalin for one minute, and then cleaned with pure water and air-dried to form a reduced silver layer (approximately 20 nm thick) in the vicinity of the primer layer surface to produce a PET film with a reduced silver layer.

Next, the following electroplating process was performed on the PET film with reduced silver layer to produce a PET film with silver layer having a 50-nm-thick silver layer on a reduced silver layer. DAIN Silver Bright PL-50 (Daiwa Fine Chemicals Co., Ltd.) adjusted to pH 7.8 using 8 M potassium hydroxide was used as the electroplating solution. The PET film with silver layer was immersed in the electroplating solution and plated for 15 seconds at 0.33 A/dm², and was then cleaned under flowing pure water for 1 minute and air-dried.

The obtained PET film with silver layer was immersed in an aqueous solution of thiourea (100 ppm by weight thiourea) for 60 seconds to perform surface treatment of the silver layer. After surface treatment, it was cleaned with pure water and air-dried.

Then, the following electroplating process was performed on the silver layer after surface treatment, and a 75-nm-thick silver layer was further formed on the silver layer after surface treatment, and a silver reflective layer was obtained. DAIN Silver Bright PL-50 (Daiwa Fine Chemicals Co., Ltd.) adjusted to pH 7.8 using 8 M potassium hydroxide was used as the electroplating solution. The PET film with silver layer after surface treatment was immersed in the electroplating solution and plated for 15 seconds at 0.5 A/dm², and was then cleaned under flowing pure water for 1 minute, and air-dried. Additionally, to remove the surface oxide film, it was immersed for 90 seconds in a 10 wt% aqueous solution of DIAN Silver ACC (Daiwa Fine Chemicals Co., Ltd.) (6% by weight methanesulfonic acid) as post-electroplating processing. It was then cleaned under flowing pure water for 1 minute and air-dried.

A PET film on which a silver reflective layer was formed was thereby obtained. When the arithmetic mean roughness Ra of the surface of the formed silver layer was measured using an atomic force microscope (AFM), it was 3.4 nm.

### [Attachment of corrosion inhibitor]

Surface modification of the silver reflective layer was performed by immersing it for 15 seconds in a 0.01 wt% aqueous solution of pyrimidine as a corrosion inhibitor and then cleaning it with water.

The attached amount of corrosion inhibitor was calculated by a method using 25% HCl. More specifically, the PET film with the silver reflective layer as provided with the corrosion inhibitor was immersed in 25% HCl to leach out the corrosion inhibitor, and the attached amount was calculated by measuring the UV absorption spectrum with a UV-3100 (Shimadzu Corp.).

### (Production of protective layer 1)

As a composition for formation of protective layer 1, a mixed solution of acrylate polymer (UNIDIC EKS-675; DIC Corp.) (30 parts by weight as solids), a benzotriazole-based ultraviolet absorber (Tinuvin 405; BASF Corp.) (1.5 parts by weight), a hindered amine-based photostabilizer (Tinuvin 292; BASF Corp.) (0.3 parts by weight), cyclohexanone (3 parts by weight), methyl isobutyl ketone (55 parts by weight), and a fluorosurfactant (MEGAFACE F-780-F; DIC Corp.) (0.01 parts by weight as solids) was prepared.

Then, the obtained composition for formation of protective layer 1 was applied onto the silver reflective layer by bar coating such that the film thickness after drying was 15 µm, and after drying for 2 minutes at 130°C, ultraviolet exposure at a wavelength of 254 nm was performed at 500 mJ/cm² using a UV irradiation apparatus (with a metal halide lamp as a UV lamp; GS Yuasa Corp.), and protective layer 1 was formed.

### (Production of protective layer 2)

As a composition for formation of protective layer 2, a mixed solution of fluorine-based UV-curable resin (DEFENSA FH-700; DIC Corp.) (22 parts by weight as solids), cyclohexanone (5 parts by weight), methyl ethyl ketone (72 parts by weight), and a fluorosurfactant (MEGAFACE F-780-F; DIC Corp.) (0.04 parts by weight as solids) was prepared.

Then, the obtained composition for formation of protective layer 2 was applied onto the above protective layer 1 by bar coating such that a dry film thickness of 10 µm was attained, and after drying for 2 minutes at 130°C, ultraviolet exposure at a wavelength of 254 nm was performed at 100 mJ/cm² using a UV irradiation apparatus (with a metal halide lamp as a UV lamp; GS Yuasa Corp.), thereby having formed protective layer 2 and produced a film mirror.

### <Examples 22 to 31>

Film mirrors were produced according to the same procedure as Example 1 except that the type and the attached amount of corrosion inhibitor were changed.

### <Evaluation>

On the film mirrors obtained in Examples 21 to 31, the adhesion evaluation and the lightfastness evaluation as performed in the above Working Example A were performed, and the following evaluations of reflectance and resistance to moist heat were also performed.

### (Reflectance)

For each of the film mirrors produced in Examples and Comparative Examples, the reflectance of the silver reflective layer (reflectance of the relevant film mirror) was measured. Specifically, an ultraviolet-visible-near infrared spectrophotometer UV-3100 (Shimadzu Corp.) was used to irradiate the film mirror with light from its protective layer side and measure the reflectance (400 nm) of the silver reflective layer, and the measurements were evaluated according to the following criteria. From a practical standpoint, evaluation levels A to C fall within an acceptable range. Results are set forth in Table 2.
"A": Reflectance was not less than 75%.
"B": Reflectance was not less than 70% but less than 75%.
"C": Reflectance was not less than 65% but less than 70%.
"D": Reflectance was less than 65%.

### (Resistance to moist heat)

Each of the film mirrors produced in Examples and Comparative Examples was placed inside a temperature-humidity chamber (PR-3J; ESPEC Corp.) and left to stand for 1000 hours under such environmental conditions that the temperature was 85°C and the humidity was 85% RH, and the reduction in reflectance at 450 nm (reflectance before being left to stand (%) minus reflectance after being left to stand (%)) of the relevant film mirror was determined and evaluated according to the following criteria. An ultraviolet-visible-near infrared spectrophotometer UV-3100 (Shimadzu Corp.) was used in reflectance measurement. From a practical standpoint for durability, evaluation levels A to C fall within an acceptable range. Results are set forth in Table 2.

### <Evaluation criteria>

A: Reflectance reduction was less than 3%.
B: Reflectance reduction was not less than 3% but less than 5%.
C: Reflectance reduction was not less than 5% but less than 10%.
D: Reflectance reduction was not less than 10%.

[Table 2]

**Table 2**

| | Corrosion inhibitor | | Adsorption mode (step) | Protective layer thickness | UV absorber added ? | Evaluation | | | |
|---|---|---|---|---|---|---|---|---|---|
| | Type | Attached amount (mg/m²) | | | | Adhesion | Lightfast -ness | Initial reflectance | Resistance to moist heat |
| EX 21 | Pyrimidine | 1 | Immerse→ clean | 25µm | Yes | A | A | A | C |
| EX 22 | 2-Mercaptopyrimidine | 1 | Immerse→ clean | 25µm | Yes | A | A | A | B |
| EX 23 | Disodium 2-[N-(2,6-dimercaptopyrimidin-4-yl)-N-methylamino]acetate | 1 | Immerse→ clean | 25µm | Yes | A | B | A | A |
| EX 24 | Tetrazole | 1 | Immerse→ clean | 25µm | Yes | A | A | A | C |
| EX 25 | 5-Mercaptotetrazole | 1 | Immerse→ clean | 25µm | Yes | A | A | A | B |
| EX 26 | 1-(5-Methylureidophenyl)-5-mercaptotetrazole | 1 | Immerse→ clean | 25µm | Yes | A | A | A | A |
| EX 27 | Disodium 2-[N-(2,6-dimercaptopyrimidin-4-yl)-N-methylamino]acetate | 0.2 | Immerse→ clean | 25µm | Yes | A | B | A | B |
| EX 28 | Disodium 2-[N-(2,6-dimercaptopyrimidin-4-yl)-N-methylamino]acetate | 5 | Immerse→ clean | 25µm | Yes | B | B | B | A |
| EX 29 | Pyridine | 1 | Immerse→ clean | 25µm | Yes | A | C | A | D |
| EX 30 | Aminopyridine | 1 | Immerse→ clean | 25µm | Yes | A | C | A | D |
| EX 31 | 3-Amino-1,2,4-triazole | 1 | Immerse→ clean | 25µm | Yes | A | C | A | D |

As shown in Table 2, it was confirmed that the film mirror of the present invention exhibits excellent reflectance and resistance to moist heat.

As is understood from the results of Examples 21 to 31, it was confirmed that when a compound having a pyrimidine skeleton is used and when a compound having a tetrazole skeleton is used, adhesion and lightfastness are excellent, and initial reflectance and resistance to moist heat are also excellent.

Furthermore, as is understood from a comparison of Examples 21 to 23, it was confirmed that when a compound represented by formula (A) having a mercapto group or an amino group as a substituent is used, resistance to moist heat is more excellent.

Furthermore, as is understood from a comparison of Examples 24 to 26, it was confirmed that when a compound represented by formula (B) having a mercapto group or a methylphenylureido group as a substituent is used, resistance to moist heat is more excellent.

### REFERENCE SIGNS LIST

- 10, 10a, 10b, 100: Film mirror
- 12: Resin substrate
- 14: Silver reflective layer
- 16: Corrosion inhibitor
- 18: Protective layer
- 20: Resin substrate-silver reflective layer combination
- 22: Primer layer

## Claims

1. A film mirror for solar radiation collection, comprising at least a protective layer, a silver reflective layer, and a resin substrate in this order from a light incident side,
wherein the film mirror has a corrosion inhibitor present at either or both of a surface and a surface layer of the silver reflective layer on the protective layer side, with a content of the corrosion inhibitor being 0.1 to 10 mg/m².

2. The film mirror for solar radiation collection according to claim 1, wherein the protective layer contains an ultraviolet absorber.

3. The film mirror for solar radiation collection according to claim 1 or 2, wherein the protective layer has a thickness of 10 to 500 µm.

4. The film mirror for solar radiation collection according to any one of claims 1 to 3, wherein the corrosion inhibitor includes at least one compound selected from the group consisting of compounds represented by formula (F), compounds represented by formula (I), and compounds represented by formula (J): 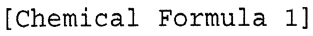 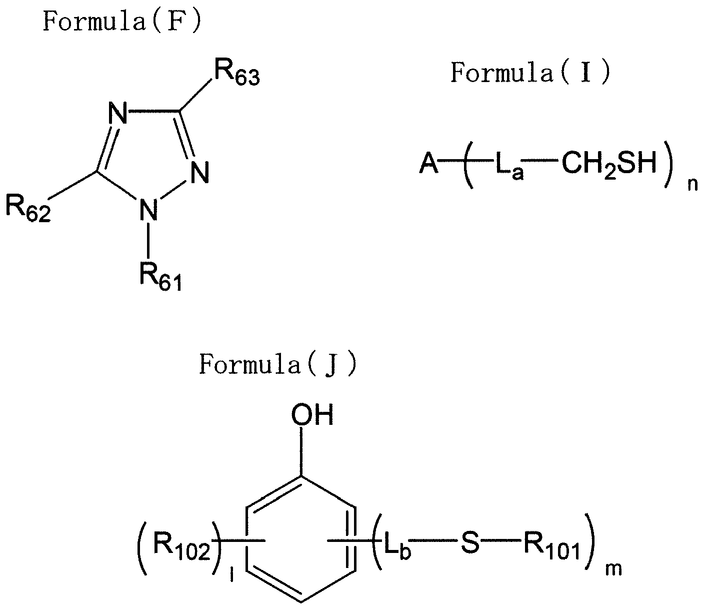 [in formula (F), R₆₁ to R₆₃ each independently denote a substituent;
in formula (I), A denotes an aliphatic hydrocarbon group having 1 to 3 carbon atoms, Lₐ denotes an alkylene group, -S-, -CO-, -O-, or a group having a combination thereof, and n denotes an integer 2 to 4; and
in formula (J), R₁₀₁ and R₁₀₂ each independently denote a substituent, L_{b} denotes an alkylene group, m denotes an integer 1 to 5, and 1 denotes an integer 0 to 4, with m and 1 satisfying a relation m + 1 = 5.]

5. The film mirror for solar radiation collection according to any one of claims 1 to 3, wherein the corrosion inhibitor includes at least one compound selected from the group consisting of compounds having a pyrimidine skeleton and compounds having a tetrazole skeleton.

6. The film mirror for solar radiation collection according to claim 5, wherein the corrosion inhibitor includes at least one compound selected from the group consisting of pyrimidine compounds represented by formula (K) and tetrazole compounds represented by formula (L): 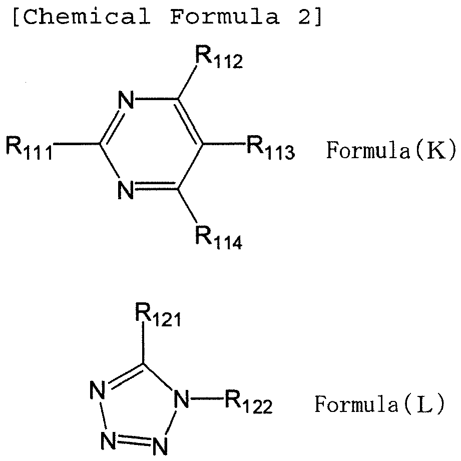 [in formula (K), R₁₁₁ to R₁₁₄ each independently denote a hydrogen atom or a substituent; and
in formula (L), R₁₂₁ to R₁₂₂ each independently denote a hydrogen atom or a substituent.]

7. The film mirror for solar radiation collection according to any one of claims 1 to 6, wherein the corrosion inhibitor is contained inside the silver reflective layer.

8. A method for producing the film mirror for solar radiation collection according to any one of claims 1 to 7, comprising:
step (1) of providing the corrosion inhibitor onto a silver reflective layer of a resin substrate-silver reflective layer combination; and
step (2) of forming the protective layer on the silver reflective layer as provided with the corrosion inhibitor.

9. The method for producing the film mirror for solar radiation collection according to claim 8, wherein the step (1) of providing the corrosion inhibitor is a step of applying the corrosion inhibitor onto the silver reflective layer or a step of immersing the resin substrate-silver reflective layer combination in the corrosion inhibitor.

10. The method for producing the film mirror for solar radiation collection according to claim 8 or 9, further comprising step (3) of cleaning with a solvent after the step (1) and before the step (2).
